# EUROPEAN PATENT APPLICATION

(11) **EP 4 131 063 A1**
(43) Date of publication of application: **08.02.2023**
(21) Application number: 21789400.5
(22) Date of filing: 23.03.2021
(51) Int. Cl.: G06K 9/00

(54) **EYE BAG DETECTION METHOD AND DEVICE**

(30) Priority: 14.04.2020 CN 202010288955
(71) Applicant: HUAWEI TECHNOLOGIES CO., LTD., Shenzhen, Guangdong 518129 (CN); Institute of Automation, Chinese Academy of Sciences, Beijing 100190 (CN)
(72) Inventor: ZHOU, Yidan, Shenzhen, Guangdong 518129 (CN); LU, Yuewan, Shenzhen, Guangdong 518129 (CN); QIN, Xiaoran, Beijing 100190 (CN); CHEN, Weihan, Beijing 100190 (CN); DONG, Chen, Shenzhen, Guangdong 518129 (CN); GAO, Wenmei, Shenzhen, Guangdong 518129 (CN)
(74) Representative: Thun, Clemens
(86) International application number: PCT/CN2021/082284
(87) International publication number: WO 2021/208677

(57) **Abstract**

This application provides an eye bag detection method and apparatus, and relates to the field of facial recognition technologies. The method includes: obtaining a to-be-detected image, where the to-be-detected image includes an eye bag region of interest ROI; detecting the eye bag ROI by using a preset convolutional neural network model, to obtain an eye bag detection score and eye bag position detection information; and when the eye bag detection score is within a preset score range, annotating the to-be-detected image based on the eye bag detection score and the eye bag position detection information to obtain eye bag annotation information. According to the technical solutions provided in this application, a position and a score of an eye bag can be accurately recognized. In this way, accuracy of recognizing the eye bag is significantly improved.

## Description

This application claims priority to Chinese Patent Application No. 202010288955.7, filed with the China National Intellectual Property Administration on April 14, 2020 and entitled "EYE BAG DETECTION METHOD AND APPARATUS", which is incorporated herein by reference in its entirety.

### TECHNICAL FIELD

This application relates to the field of facial recognition technologies, and in particular, to an eye bag detection method and apparatus.

### BACKGROUND

Facial recognition technologies have been extensively applied in a plurality of fields such as photography, security protection, education, and finance, and as the facial recognition technologies are applied more intensively, more attention is paid to accuracy of recognition. An eye bag is an important object to be recognized. A survey shows that about 65% of users expect that eye bag recognition should be performed.

In the conventional technology, facial key point detection is usually performed on a to-be-detected image to obtain eye key points, and then a preset region is determined based on the eye key points and used as an eye bag region.

However, because the conventional technology does not actually recognize the eye bag, a shape and size of the preset region (that is, the eye bag region) determined based on the eye key points is closely related to a shape and size of an eye, but a shape and size of a real eye bag are not specifically related to the shape and size of the eye. Therefore, the eye bag region determined by the conventional technology greatly differs from the actual eye bag region, and accuracy is low.

### SUMMARY

In view of this, this application provides an eye bag detection method and apparatus to improve accuracy of eye bag recognition.

To achieve the foregoing objective, according to a first aspect, an embodiment of this application provides an eye bag detection method, including:
obtaining a to-be-detected image, where the to-be-detected image includes an eye bag region of interest (region of interest, ROI);
detecting the eye bag ROI by using a preset convolutional neural network (Convolutional Neural Networks, CNN) model, to obtain an eye bag detection score and eye bag position detection information; and
when the eye bag detection score is within a preset score range, annotating the to-be-detected image based on the eye bag detection score and the eye bag position detection information to obtain eye bag annotation information.

In this embodiment of this application, the to-be-detected image including the eye bag ROI may be obtained, and then the eye bag ROI is directly detected by using the preset convolutional neural network model, to obtain the eye bag detection score and the eye bag position detection information. When the eye bag detection score is within the preset score range, that is, when it is determined that an eye bag exists, the to-be-detected image may be annotated by using the eye bag detection score and the eye bag position detection information, to obtain the eye bag annotation information for eye bag detection. Because the eye bag detection score and the eye bag position detection information herein are directly obtained from eye bag ROI recognition, instead of being set based on a size and shape of an eye, accuracy of eye bag detection can be significantly improved.

Optionally, before the detecting the eye bag ROI by using a preset convolutional neural network model, the method further includes:
performing facial key point detection on the to-be-detected image to obtain eye key points; and
determining the eye bag ROI from the to-be-detected image based on the eye key points.

Optionally, the determining the eye bag ROI from the to-be-detected image based on the eye key points includes:
determining eye center points based on the eye key points; and
obtaining, by using the eye center points as reference points, a region of a preset size and a preset shape from the to-be-detected image as the eye bag ROI.

Optionally, the eye center points are located in an upper half part of the eye bag ROI and are located at 1/2 of a width and 1/4 of a height of the eye bag ROI.

Optionally, the method further includes:
detecting the eye bag ROI by using the preset convolutional neural network model, to obtain a lying silkworm detection classification result and lying silkworm position detection information; and
when the lying silkworm detection classification result is yes, annotating a lying silkworm in the to-be-detected image based on the lying silkworm detection classification result and the lying silkworm position detection information to obtain lying silkworm annotation information.

Optionally, the eye bag position detection information includes eye bag key points, and the annotating an eye bag in the to-be-detected image based on the eye bag detection score and the eye bag position detection information includes:
performing interpolation fitting based on the eye bag key points to obtain an eye bag closed region; and
annotating the eye bag in the to-be-detected image based on the eye bag detection score and the eye bag closed region.

Optionally, the eye bag position detection information includes an eye bag segmentation mask, and the annotating an eye bag in the to-be-detected image based on the eye bag detection score and the eye bag position detection information includes:
annotating the eye bag in the to-be-detected image based on the eye bag detection score and the eye bag segmentation mask.

Optionally, the lying silkworm position detection information includes lying silkworm key points, and the annotating a lying silkworm in the to-be-detected image based on the lying silkworm detection classification result and the lying silkworm position detection information includes:
performing interpolation fitting based on the lying silkworm key points to obtain a lying silkworm closed region; and
annotating the lying silkworm in the to-be-detected image based on the lying silkworm detection classification result and the lying silkworm closed region.

Optionally, the lying silkworm position detection information includes a lying silkworm segmentation mask, and the annotating a lying silkworm in the to-be-detected image based on the lying silkworm detection classification result and the lying silkworm position detection information includes:
annotating the lying silkworm in the to-be-detected image based on the lying silkworm detection classification result and the lying silkworm segmentation mask.

Optionally, the preset convolutional neural network model includes a plurality of convolution layers, and other convolution layers than a first convolution layer include at least one depthwise separable convolution layer.

Optionally, the preset convolutional neural network model is obtained by training a plurality of sample images, where the sample image carries an eye bag annotation score and eye bag position annotation information.

Optionally, the sample image further carries a lying silkworm annotation score and lying silkworm position annotation information.

Optionally, the eye bag ROI includes a left eye bag ROI and a right eye bag ROI, and before the detecting the eye bag ROI by using a preset convolutional neural network model, the method further includes:
segmenting the to-be-detected image based on the left eye bag ROI and the right eye bag ROI to obtain a left eye bag ROI image and a right eye bag ROI image;
performing mirroring processing on the right eye bag ROI image along a left-right direction; and
inputting the left eye bag ROI image and the right eye bag ROI image on which mirroring processing is performed to the preset convolutional neural network model.

Optionally, the annotating an eye bag in the to-be-detected image includes:
annotating the left eye bag ROI image and the right eye bag ROI image on which mirroring processing is performed; and
performing mirroring processing on the annotated right eye bag ROI image along the left-right direction again.

According to a second aspect, an embodiment of this application provides a convolutional neural network model training method, including:
obtaining a plurality of sample images, where the sample image includes an eye bag ROI, and the sample image carries an eye bag annotation score and eye bag position annotation information;
detecting the eye bag ROI by using a convolutional neural network model, to obtain an eye bag detection score and eye bag position detection information; and
determining model parameters of the convolutional neural network model based on the eye bag detection score, the eye bag position detection information, the eye bag annotation score, and the eye bag position annotation information of the sample image.

Optionally, the sample image further carries a lying silkworm annotation classification result and lying silkworm position annotation information, and the method further includes:
detecting the eye bag ROI by using the convolutional neural network model, to obtain a lying silkworm detection classification result and lying silkworm position detection information; and
the determining model parameters of the convolutional neural network model based on the eye bag detection score, the eye bag position detection information, the eye bag annotation score, and the eye bag position annotation information of the sample image includes:
   determining the model parameters of the convolutional neural network model based on the eye bag detection score, the eye bag position detection information, the eye bag annotation score, the eye bag position annotation information, the lying silkworm annotation classification result, the lying silkworm position annotation information, the lying silkworm detection classification result, and the lying silkworm position detection information of the sample image.

According to a third aspect, an embodiment of this application provides an eye bag detection apparatus, including:
an obtaining module, configured to obtain a to-be-detected image, where the to-be-detected image includes an eye bag ROI;
a detection module, configured to detect the eye bag ROI by using a preset convolutional neural network model, to obtain an eye bag detection score and eye bag position detection information; and
an annotation module, configured to annotate an eye bag in the to-be-detected image based on the eye bag detection score and the eye bag position detection information when the eye bag detection score is within a preset score range, to obtain eye bag annotation information.

Optionally, the apparatus further includes a determining module, where
the detection module is further configured to perform facial key point detection on the to-be-detected image to obtain eye key points; and
the determining module is configured to determine the eye bag ROI from the to-be-detected image based on the eye key points.

Optionally, the determining module is further configured to:
determine eye center points based on the eye key points; and
obtain, by using the eye center points as reference points, a region of a preset size and a preset shape from the to-be-detected image as the eye bag ROI.

Optionally, the eye center points are located in an upper half part of the eye bag ROI and are located at 1/2 of a width and 1/4 of a height of the eye bag ROI.

Optionally, the detection module is further configured to detect the eye bag ROI by using the preset convolutional neural network model, to obtain a lying silkworm detection classification result and lying silkworm position detection information; and
the annotation module is further configured to annotate a lying silkworm in the to-be-detected image based on the lying silkworm detection classification result and the lying silkworm position detection information when the lying silkworm detection classification result is yes, to obtain lying silkworm annotation information.

Optionally, the eye bag position detection information includes eye bag key points, and the annotation module is further configured to:
perform interpolation fitting based on the eye bag key points to obtain an eye bag closed region; and
annotate the eye bag in the to-be-detected image based on the eye bag detection score and the eye bag closed region.

Optionally, the eye bag position detection information includes an eye bag segmentation mask, and the annotation module is further configured to:
annotate the eye bag in the to-be-detected image based on the eye bag detection score and the eye bag segmentation mask.

Optionally, the lying silkworm position detection information includes lying silkworm key points, and the annotation module is further configured to:
perform interpolation fitting based on the lying silkworm key points to obtain a lying silkworm closed region; and
annotate the lying silkworm in the to-be-detected image based on the lying silkworm detection classification result and the lying silkworm closed region.

Optionally, the lying silkworm position detection information includes a lying silkworm segmentation mask, and the annotation module is further configured to:
annotate the lying silkworm in the to-be-detected image based on the lying silkworm detection classification result and the lying silkworm segmentation mask.

Optionally, the preset convolutional neural network model includes a plurality of convolution layers, and other convolution layers than a first convolution layer include at least one depthwise separable convolution layer.

Optionally, the preset convolutional neural network model is obtained by training a plurality of sample images, where the sample image carries an eye bag annotation score and eye bag position annotation information.

Optionally, the sample image further carries a lying silkworm annotation score and lying silkworm position annotation information.

Optionally, the eye bag ROI includes a left eye bag ROI and a right eye bag ROI, and the apparatus further includes:
a segmentation module, configured to segment the to-be-detected image based on the left eye bag ROI and the right eye bag ROI to obtain a left eye bag ROI image and a right eye bag ROI image;
a mirroring module, configured to perform mirroring processing on the right eye bag ROI image along a left-right direction; and
an input module, configured to input the left eye bag ROI image and the right eye bag ROI image on which mirroring processing is performed to the preset convolutional neural network model.

Optionally, the annotation module is further configured to:
annotate the left eye bag ROI image and the right eye bag ROI image on which mirroring processing is performed; and
perform mirroring processing on the annotated right eye bag ROI image along the left-right direction again.

According to a fourth aspect, an embodiment of this application provides a convolutional neural network model training apparatus, including:
an obtaining module, configured to obtain a plurality of sample images, where the sample image includes an eye bag ROI, and the sample image carries an eye bag annotation score and eye bag position annotation information;
a detection module, configured to detect the eye bag ROI by using a convolutional neural network model, to obtain an eye bag detection score and eye bag position detection information; and
a determining module, configured to determine model parameters of the convolutional neural network model based on the eye bag detection score, the eye bag position detection information, the eye bag annotation score, and the eye bag position annotation information of the sample image.

Optionally, the sample image further carries a lying silkworm annotation classification result and lying silkworm position annotation information;
the detection module is further configured to detect the eye bag ROI by using the convolutional neural network model, to obtain a lying silkworm detection classification result and lying silkworm position detection information; and
the determining module is further configured to determine the model parameters of the convolutional neural network model based on the eye bag detection score, the eye bag position detection information, the eye bag annotation score, the eye bag position annotation information, the lying silkworm annotation classification result, the lying silkworm position annotation information, the lying silkworm detection classification result, and the lying silkworm position detection information of the sample image.

According to a fifth aspect, an embodiment of this application provides a lying silkworm detection method, including:
obtaining a to-be-detected image, where the to-be-detected image includes an eye bag ROI;
detecting the eye bag ROI by using a preset convolutional neural network model, to obtain a lying silkworm detection classification result and lying silkworm position detection information; and
when the lying silkworm detection classification result is yes, annotating a lying silkworm in the to-be-detected image based on the lying silkworm detection classification result and the lying silkworm position detection information to obtain lying silkworm annotation information.

In this embodiment of this application, the to-be-detected image including the eye bag ROI may be obtained, and then the eye bag ROI is directly detected by using the preset convolutional neural network model, to obtain the lying silkworm detection classification result and the lying silkworm position detection information. When it is determined that a lying silkworm exists (that is, the lying silkworm detection classification result is yes), the to-be-detected image may be annotated by using the lying silkworm detection classification result and the lying silkworm position detection information, to obtain the lying silkworm annotation information for lying silkworm detection. Because the lying silkworm detection classification result and the lying silkworm position detection information herein are directly obtained from eye bag ROI recognition, instead of being set based on a size and shape of an eye, accuracy of lying silkworm detection can be significantly improved.

According to a sixth aspect, an embodiment of this application provides a convolutional neural network model training method, including:
obtaining a plurality of sample images, where the sample image includes an eye bag ROI, and the sample image carries a lying silkworm annotation classification result and lying silkworm position annotation information;
detecting the eye bag ROI by using a convolutional neural network model, to obtain a lying silkworm detection classification result and lying silkworm position detection information; and
determining model parameters of the convolutional neural network model based on the lying silkworm annotation classification result, the lying silkworm position annotation information, the lying silkworm detection classification result, and the lying silkworm position detection information of the sample image.

According to a seventh aspect, an embodiment of this application further provides a lying silkworm detection apparatus, including:
an obtaining module, configured to obtain a to-be-detected image, where the to-be-detected image includes an eye bag ROI;
a detection module, configured to detect the eye bag ROI by using a preset convolutional neural network model, to obtain a lying silkworm detection classification result and lying silkworm position detection information; and
an annotation module, configured to annotate a lying silkworm in the to-be-detected image based on the lying silkworm detection classification result and the lying silkworm position detection information when the lying silkworm detection classification result is yes, to obtain lying silkworm annotation information.

According to an eighth aspect, an embodiment of this application provides a convolutional neural network model training apparatus, including:
an obtaining module, configured to obtain a plurality of sample images, where the sample image includes an eye bag ROI, and the sample image carries a lying silkworm annotation classification result and lying silkworm position annotation information;
a detection module, configured to detect the eye bag ROI by using a convolutional neural network model, to obtain a lying silkworm detection classification result and lying silkworm position detection information; and
a determining module, configured to determine model parameters of the convolutional neural network model based on the lying silkworm annotation classification result, the lying silkworm position annotation information, the lying silkworm detection classification result, and the lying silkworm position detection information of the sample image.

According to a ninth aspect, an embodiment of this application provides a terminal, including a memory and a processor, where the memory is configured to store a computer program; and the processor is configured to perform the method according to the first aspect, the second aspect, the fifth aspect, or the sixth aspect when the computer program is invoked.

According to a tenth aspect, an embodiment of this application provides a computer-readable storage medium, where the computer-readable storage medium stores a computer program, and when the computer program is executed by a processor, the method according to the first aspect or the second aspect is implemented.

According to an eleventh aspect, an embodiment of this application provides a computer program product, where when the computer program product runs on a terminal, the terminal is enabled to perform the method according to the first aspect, the second aspect, the fifth aspect, or the sixth aspect.

It may be understood that, for beneficial effects of the second aspect to the eleventh aspect, reference may be made to related descriptions in the first aspect or the fifth aspect. Details are not described herein again.

### BRIEF DESCRIPTION OF DRAWINGS

FIG. 1 is a schematic diagram of facial recognition according to the conventional technology;
FIG. 2 is a schematic diagram of a structure of a convolutional neural network model according to an embodiment of this application;
FIG. 3 is a flowchart of an eye bag detection method according to an embodiment of this application;
FIG. 4 is a schematic diagram of an eye bag ROI according to an embodiment of this application;
FIG. 5 is a schematic diagram of positions of eye bag key points according to an embodiment of this application;
FIG. 6 is a schematic diagram of positions of lying silkworm key points according to an embodiment of this application;
FIG. 7A and FIG. 7B are a flowchart of another eye bag detection method according to an embodiment of this application;
FIG. 8 is a schematic diagram of an eye bag closed region according to an embodiment of this application;
FIG. 9 is a schematic diagram of a lying silkworm closed region according to an embodiment of this application;
FIG. 10 is a schematic diagram of a structure of an eye bag detection apparatus according to an embodiment of this application;
FIG. 11 is a schematic diagram of a structure of a convolutional neural network model training apparatus according to an embodiment of this application;
FIG. 12 is a schematic diagram of a structure of a lying silkworm detection apparatus according to an embodiment of this application;
FIG. 13 is a schematic diagram of a structure of another convolutional neural network model training apparatus according to an embodiment of this application;
FIG. 14 is a schematic diagram of a structure of a terminal according to an embodiment of this application;
FIG. 15 is a block diagram of a software structure of a terminal according to an embodiment of this application;
FIG. 16 is a schematic diagram of a structure of another terminal according to an embodiment of this application; and
FIG. 17 is a schematic diagram of a structure of a server according to an embodiment of this application.

### DESCRIPTION OF EMBODIMENTS

To facilitate understanding of the technical solutions in the embodiments of this application, the following first describes application scenarios in the embodiments of this application.

An eye bag refers to sagging and bloating of a lower eyelid skin like a bag. Eye bags may be classified into a primary category and a secondary category based on causes of diseases. A secondary eye bag is a result of excessive orbital fat accumulation and weakening of a palpebral support structure together. Usually, the secondary eye bag may be caused by factors such as improper massage, staying up late, and growing older. A shape and size of the eye bag are not directly related to a shape and size of an eye. Although eye bags do not affect health of a user, on one hand, the eye bags affect appearance and beauty, and on the other hand, the eye bags also reflect some health problems, such as fatigue and other sub-health problems. In addition, the eye bags are also an important facial feature.

In view of the foregoing reasons, eye bag recognition is increasingly important in the field of facial recognition technologies. For example, in a process of shooting an image, facial detection and positioning may be performed with assistance of eye bags. In a facial beautification application, a facial beautification effect can be achieved by recognizing and repairing eye bags (color adjustment and filtering), or by distinguishing eye bags from lying silkworms. In a skin detection application, a skin health degree of a user can be determined by recognizing eye bags and a corresponding skin care suggestion can be provided. In an age simulation or facial simulation application, facial images of users in different age groups may be generated by recognizing eye bags and adjusting parameters such as relaxation degrees, colors, and sizes of the eye bags.

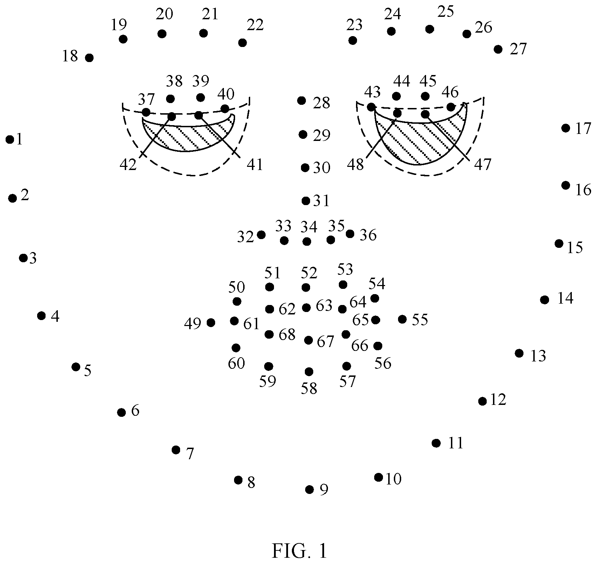

FIG. 1 is a schematic diagram of facial recognition according to the conventional technology. In the conventional technology, facial key point detection is performed to recognize and obtain facial key points (points 1-68 in FIG. 1) from a to-be-detected image, then eye key points (key points 37-42 and key points 43-48 in FIG. 1) among the facial key points are determined, and a region of a preset size is determined as an eye bag region (a region enclosed by a dashed line in FIG. 1). Distribution of the eye key points is closely related to a size and shape of an eye, but an actual shape and size of the eye bag are not directly related to the shape and size of the eye. Therefore, the eye bag region determined according to the conventional technology is greatly different from an actual eye bag region (a shadow region enclosed by a solid line in FIG. 1). For example, in FIG. 1, the eye bag region determined by the conventional technology is much larger than the actual eye bag region, and its shape is also greatly different from the shape of the actual eye bag region, and accuracy is low.

To resolve this technical problem, this application provides an eye bag detection method. In an embodiment of this application, a to-be-detected image including an eye bag ROI may be obtained, and then the eye bag ROI is directly detected by using a preset convolutional neural network model, to obtain an eye bag detection score and eye bag position detection information. When the eye bag detection score is within a preset score range, that is, when it is determined that an eye bag exists, the to-be-detected image may be annotated by using the eye bag detection score and the eye bag position detection information, to obtain eye bag annotation information for eye bag detection. Because the eye bag detection score and the eye bag position detection information herein are directly obtained from eye bag ROI recognition, instead of being set based on a size and shape of an eye, accuracy of eye bag detection can be significantly improved.

Before describing the embodiments of this application in detail, the following first describes a convolutional neural network.

The CNN is a kind of feedforward neural network (Feedforward Neural Networks) having a deep structure and including convolutional computation, and is one of representative algorithms for deep learning (deep learning). The CNN has representation learning (representation learning) and feature combination capabilities, and can perform shift-invariant classification (shift-invariant classification) on input information based on a hierarchical structure of the CNN. The CNN is widely applied in a plurality of fields such as computer vision and natural language processing.

The convolutional neural network may include an input layer, a convolution layer (convolution layer), an excitation layer, a pooling layer (pooling layer), and a fully connected layer (Fully Connected layer).

The input layer may be configured to receive an input to-be-detected image.

Before the to-be-detected image is input to the input layer, preprocessing may be performed on the to-be-detected image, where the preprocessing includes size scaling and pixel normalization to a same numerical range (for example, [0, 1]).

The convolution layer may be configured to perform feature extraction on data from the input layer. The convolution layer may include a filter, each feature map may include a plurality of weights, and these weights are also model parameters that need to be trained in a convolutional neural network model. When feature extraction is performed on the input image by using the convolution layer, a convolution operation may be performed on the image by using the filter, to obtain a feature map, where the feature can describe a feature of the image. Deeper feature maps can be extracted by using a plurality of convolution layers connected in sequence.

The excitation layer may be configured to perform nonlinear mapping on an output result of the convolution layer.

The pooling layer may be disposed after the convolution layer and is configured to compress the feature map to reduce complexity of network computation on one hand and extract main features on the other hand. The pooling layer may include an average pooling (Average Pooling) layer or a maximum pooling (Max Pooling) layer.

The fully connected layer may be disposed at an end of the convolutional neural network and is configured to perform connection based on the features finally extracted by the previous layers, and obtain a classification or detection result.

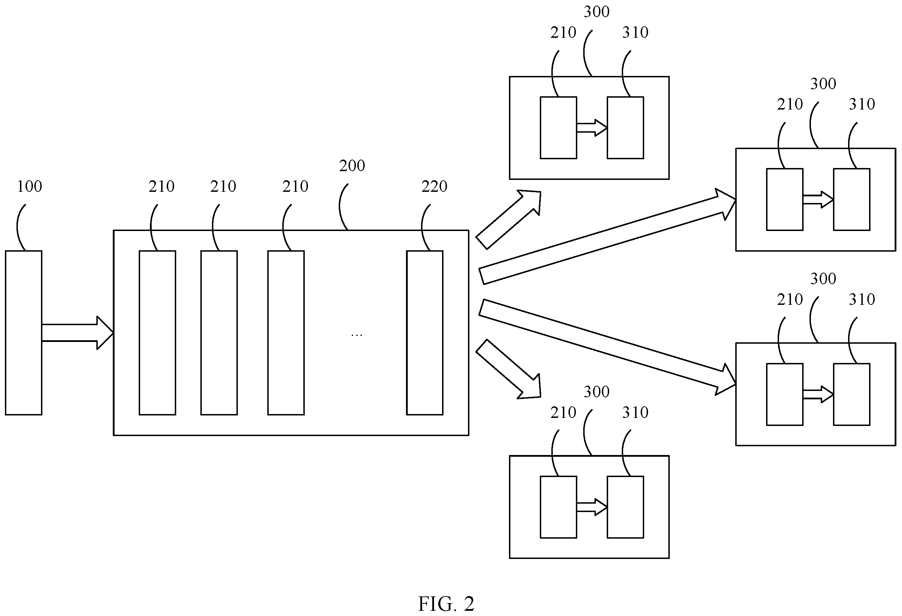

FIG. 2 is a schematic diagram of a structure of a convolutional neural network model according to an embodiment of this application. The convolutional neural network model may include an input layer 100, a feature extraction subnetwork 200, and a feature combination detection subnetwork 300 that are connected in sequence. The feature extraction subnetwork 200 may include a plurality of convolution layers 210 connected in sequence and one pooling layer 220. A convolution layer 210 after a second layer in the plurality of convolution layers 210 may be a depthwise separable convolution layer, to reduce a quantity of parameters and an amount of computation, thereby reducing a model size and facilitating embedding of mobile terminal applications. The pooling layer 220 may be an average pooling layer. The feature combination detection subnetwork 300 may include at least one group of depthwise separable convolution layers and a fully connected layer 310. The depthwise separable convolution layer in the feature combination detection subnetwork 300 may be configured to further perform feature learning for a specific task; and after each group of depthwise separable convolution layers and the fully connected layer 310 are connected to the pooling layer 220 in sequence, configured to determine a classification result of the task, such as the foregoing eye bag detection score or eye bag position detection information.

A size of an image (that is, a to-be-detected image or a sample image) input by the input layer 100 and a size of each filter in the convolution layer 210 may be determined in advance. For example, the image input by the input layer 100 may be 112*112*3, and the size of the filter may be 3*3.

It should be noted that, when the feature combination detection subnetwork 300 includes only one group of depthwise separable convolution layers and a fully connected layer 310, the convolutional neural network model is a single-task learning network; or when the feature combination detection subnetwork 300 includes a plurality of groups of depthwise separable convolution layers and a fully connected layer 310, the convolutional neural network model is a multi-task learning network. The multi-task learning network can share the basic feature extraction subnetwork 200, thereby reducing the amount of computation. The single-task learning network can conveniently perform feature learning for a specific task, and a quantity of extracted parameters increases in general, thereby significantly improving accuracy of a detection result.

In an embodiment of this application, an eye bag detection score (a lying silkworm detection classification result) and eye bag position detection information (lying silkworm position detection information) may be respectively obtained by using two single-task learning networks, or an eye bag detection score (a lying silkworm detection classification result) and eye bag position detection information (lying silkworm position detection information) may be obtained by using a single-target multi-task learning network, so that an eye bag or a lying silkworm can be recognized separately. Alternatively, in some other embodiments, an eye bag detection score, eye bag position detection information, a lying silkworm detection classification result, and lying silkworm position detection information may be obtained simultaneously by using a multi-target multi-task learning network.

Specific embodiments are used below to describe in detail the technical solutions of this application. The following several specific embodiments may be combined with each other, and a same or similar concept or process may not be described repeatedly in some embodiments.

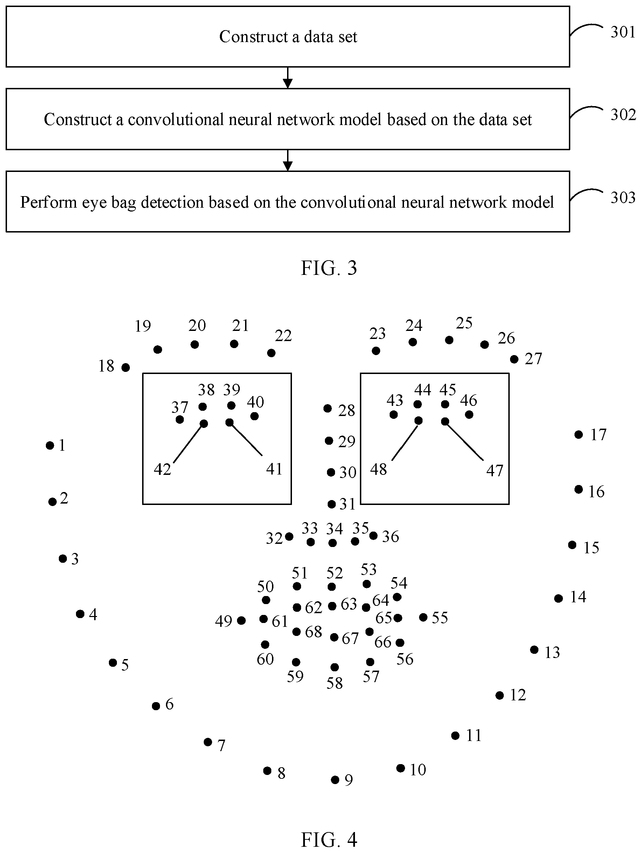

FIG. 3 is a flowchart of an eye bag detection method according to an embodiment of this application. It should be noted that the method is not limited to a specific sequence described in FIG. 3 and the following descriptions. It should be understood that, in other embodiments, sequences of some steps in the method may be interchanged based on an actual requirement, or some steps in the method may be omitted or deleted.

S301. Construct a data set.

To train a convolutional neural network model in this embodiment of this application, so as to obtain a preset convolutional neural network model that can be used for eye bag detection, a data set may be first constructed.

During construction of the data set, a plurality of sample images may be obtained, and each sample image may include an eye bag ROI. Then an eye bag in the sample image is annotated, where the annotated sample image includes an eye bag annotation score and eye bag position annotation information. Certainly, because the eye bag ROI is the same as a lying silkworm, the eye bag ROI may also be used to detect the lying silkworm. When the lying silkworm is also detected, the lying silkworm in the sample image may also be annotated, where the annotated sample image includes a lying silkworm annotation classification result and lying silkworm position annotation information. Alternatively, the lying silkworm in the sample image may be annotated separately, so that only the lying silkworm is detected. When annotation is complete, the data set can be divided into two parts, one as a training set and the other as a test set.

It should be noted that the sample image herein may be an image that includes only the eye bag ROI, or certainly may be an image that further includes other information. For example, the sample image may include an entire face. In this case, facial key point detection may be first performed to obtain a recognition result shown in FIG. 1, and then the sample image is segmented based on eye key points, to obtain the eye bag ROI.

The eye bag ROI is a region of interest when a machine recognizes the eye bag or the lying silkworm in the image. When the sample image is segmented to obtain the eye bag ROI, eye center points may be determined based on the eye key points, and then a region of a preset size and a preset shape is obtained from the sample image as the eye bag ROI by using the eye center points as reference points.

It should be noted that the preset size and the preset shape may be determined in advance. Optionally, the eye bag ROI may be a rectangular region, and the eye center points may be located at 1/2 of a width and 1/4 of a height of the region. Using the face shown in FIG. 1 as an example, left eye center points are determined based on left eye key points 37-42, right eye center points are determined based on right eye key points 43-48, and then the face image is segmented based on the left eye center points and the right eye center points respectively, to obtain a rectangular left eye bag ROI and a rectangular right eye bag ROI, as shown in FIG. 4.

Because details of the image are affected by a terminal type and a light source, these details affect accuracy of the eye bag detection. A convolutional neural network model obtained through training by using an image shot by one type of terminal as a sample image may not be readily used to accurately detect an eye bag in an image shot by another type of terminal. A convolutional neural network model obtained through training by using an image shot under one light source as a sample image may not be readily used to accurately detect an eye bag in an image shot under another light source. Therefore, to improve robustness of the convolutional neural network model and ensure that the eye bag detection method provided in this embodiment of this application can stably and reliably detect an eye bag in different environments, when a plurality of sample images are obtained, images shot by a plurality of types of terminals in a plurality of light source environments may be obtained as sample images.

For example, images shot by mobile phones from a plurality of manufacturers in environments such as 4000K (color temperature) 100 Lux (luminance), 4000K 300 Lux, white light, and yellow light may be obtained as sample images.

The eye bag annotation score, eye bag position annotation information, lying silkworm annotation classification result, and lying silkworm position annotation information can be obtained through annotation. The eye bag annotation score may indicate severity of the annotated eye bag; the eye bag position annotation information may describe an annotated eye bag position, and the eye bag position annotation information may include annotated eye bag key points or an eye bag segmentation mask; the lying silkworm annotation classification result may include yes or no; the lying silkworm position annotation information may include an annotated lying silkworm position, and the lying silkworm position annotation information may include annotated lying silkworm key points or an annotated lying silkworm segmentation mask. When the position of the eye bag or the lying silkworm is annotated by using the eye bag segmentation mask or the lying silkworm segmentation mask, a convolutional neural network may be an image semantic segmentation network.

Using the eye bag annotation score and eye bag position annotation information as an example, when a sample image is annotated, to accurately distinguish the severity of the eye bag and reduce impact of subjective factors on an eye bag perception difference, a related person in the art (such as an ophthalmologist) may first determine and establish an eye bag evaluation standard and an eye bag score chart (including an eye bag score interval and a preset score range), where the preset score range may be used to indicate an eye bag score when an eye bag exists. For example, the eye bag score interval may be [65-95], and the preset score range may be less than a score threshold 85, where a smaller score indicates a severer eye bag. When the eye bag score is less than 85, it may be considered that an eye bag exists. When the eye bag score is greater than or equal to 85, it may be considered that no eye bag exists. Then scoring may be performed based on a plurality of dimensions such as the eye bag score chart, an eye bag wrinkle depth, a degree of bloating, a size, and a degree of relaxation, to obtain the eye bag annotation score and the eye bag position annotation information. A same annotation order may be used for left and right eyes. In addition, to reduce annotation noise, key points may be annotated by at least three persons, and then an average value is used as a final annotation.

It should be noted that the eye bag score may be an average score of left and right eye bag scores. In this embodiment of this application, a positive score is used as an eye bag score, that is, a higher score indicates a better skin health status of an eye bag region of a user. However, it may be understood that, in some other embodiments, a negative score may also be used, that is, a lower eye bag score indicates a better skin health status of the eye bag region of the user

In addition, if the eye bag position annotation information includes eye bag key points or the lying silkworm position annotation information includes lying silkworm key points, that is, if the position of the eye bag or the lying silkworm is annotated by using key points, positions and a quantity of the eye bag key points or the lying silkworm key points may be determined in advance.

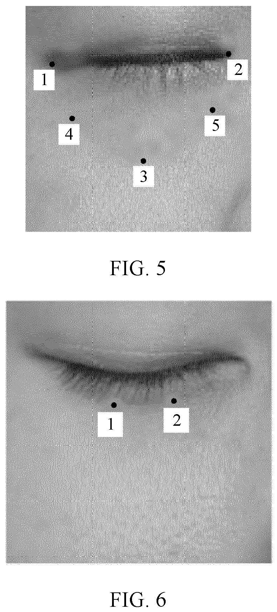

For example, FIG. 5 and FIG. 6 are respectively a schematic diagram of positions of eye bag key points and a schematic diagram of positions of lying silkworm key points according to an embodiment of this application. In FIG. 5, the eye bag key points include five key points, where key points 1 and 2 are respectively at left and right corners of an eye, key points 4 and 5 are in a middle region of the eye bag, and a key point 3 is at a bottom of the eye bag. In FIG. 6, the lying silkworm key points include two key points respectively located in a middle region of the lying silkworm.

S302. Construct a convolutional neural network model based on the data set.

A plurality of sample images may be obtained from the training set, where the sample image includes the eye bag ROI, and the sample image carries the eye bag annotation score and the eye bag position annotation information. The eye bag ROI is detected by using the convolutional neural network model, to obtain an eye bag detection score and eye bag position detection information. Then the eye bag detection score and the eye bag position detection information of each sample image are compared with the eye bag annotation score and the eye bag position annotation information, and model parameters (for example, a weight in each filter) of the convolutional neural network model are updated based on a comparison result, until the model parameters of the convolutional neural network model are determined when the convolutional neural network model converges or reaches a preset quantity of training times.

Optionally, if the convolutional neural network is further used to detect the lying silkworm, the eye bag ROI may be detected by using the convolutional neural network model, to obtain a lying silkworm detection classification result and lying silkworm position detection information; and the model parameters of the convolutional neural network model are determined based on the eye bag detection score, the eye bag position detection information, the eye bag annotation score, the eye bag position annotation information, the lying silkworm annotation classification result, the lying silkworm position annotation information, the lying silkworm detection classification result, and the lying silkworm position detection information of each sample image in a similar manner.

The eye bag detection score may indicate the severity of the detected eye bag. The eye bag position detection information may indicate the position of the detected eye bag. The lying silkworm detection classification result may include yes or no. The lying silkworm position detection information may indicate the position of the detected lying silkworm.

Optionally, at the end of the training, to test accuracy of the convolutional neural network model, a plurality of sample images may be further obtained from the test set, and the sample images are recognized by using the convolutional neural network model; and then, based on accuracy of a recognition result (for example, a difference between the eye bag detection score and the eye bag annotation score and a difference between the eye bag position detection information and the eye bag position annotation information), whether to continue to train the convolutional neural network model is determined.

S303. Perform eye bag detection based on the convolutional neural network model.

When the training of the convolutional neural network model is completed, eye bag detection may be performed on an actual to-be-detected image by using the trained convolutional neural network model.

The foregoing has generally described the eye bag detection method provided in this embodiment of this application with reference to FIG. 3, that is, including three steps: S301 of constructing a data set, S302 of constructing a convolutional neural network model based on the data set, and S303 of performing eye bag detection based on the convolutional neural network model. The three steps may be performed by one or more devices. For example, a terminal (a camera or a mobile phone) may perform S301 to collect a data set, and transmit the data set to a server for storage; the server performs S302 to obtain a convolutional neural network model through training based on the collected data set; and the terminal obtains the trained convolutional neural network model from the server and performs step 303 to implement eye bag detection. The following describes in detail the eye bag detection method based on the convolutional neural network model in S303.

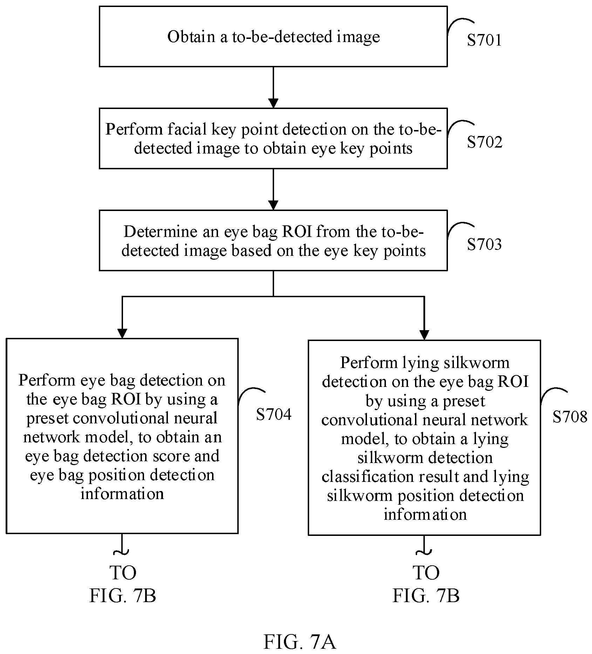

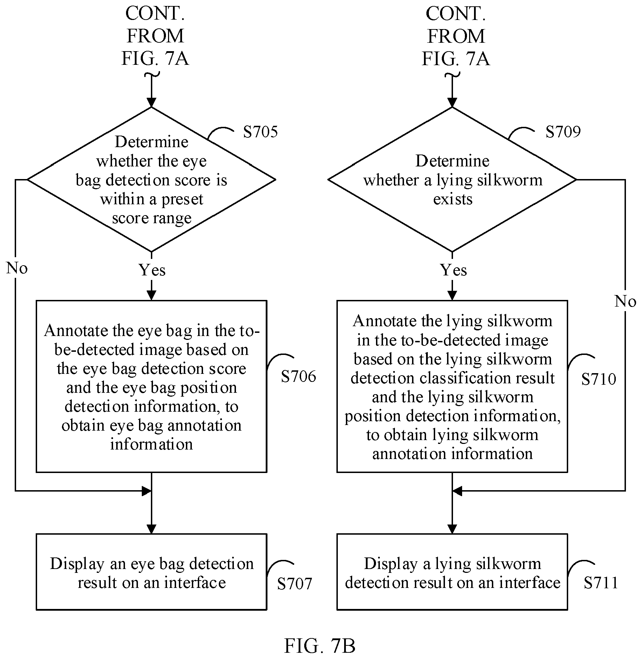

FIG. 7A and FIG. 7B are a flowchart of an eye bag detection method according to an embodiment of this application. It should be noted that the method is not limited to a specific sequence described in FIG. 7A and FIG. 7B and the following descriptions. It should be understood that, in other embodiments, sequences of some steps in the method may be interchanged based on an actual requirement, or some steps in the method may be omitted or deleted.

S701. Obtain a to-be-detected image.

The to-be-detected image may be obtained through shooting by invoking a camera, or a camera may be invoked and an image may be obtained from a viewfinder frame as the to-be-detected image, for example, in an augmented reality (Augmented Reality, AR) scenario, or an image may be obtained from a memory as the to-be-detected image, or an image may be obtained from another device as the to-be-detected image. Certainly, in an actual application, the to-be-detected image may alternatively be obtained in another manner. A manner of obtaining the to-be-detected image is not specifically limited in this embodiment of this application.

S702. Perform facial key point detection on the to-be-detected image to obtain eye key points.

A purpose of performing facial key point detection herein is to obtain eye key points, for subsequently determining an eye bag ROI. Therefore, when the facial key point detection is performed, all facial key points may be detected, or only eye key points such as key points 37-42 and key points 43-48 in FIG. 1 or FIG. 4 may be detected.

S703. Determine the eye bag ROI from the to-be-detected image based on the eye key points.

Eye center points may be determined based on the eye key points in the to-be-detected image; and then a region of a preset size and a preset shape is obtained from the to-be-detected image as the eye bag ROI by using the eye center points as reference points.

It should be noted that a manner of determining the eye center points based on the eye key points in the to-be-detected image and a manner of obtaining the eye bag ROI from the to-be-detected image by using the eye center points may be respectively the same as the manner of determining the eye center points based on the eye key points in the sample image and the manner of obtaining the eye bag ROI from the sample image by using the eye center points in S301. Details are not described herein again.

It should also be noted that, when the eye bag ROI is determined from the to-be-detected image, the eye bag ROI may be clipped from the to-be-detected image to obtain an eye bag ROI image, and then the eye bag ROI image is input into a preset convolutional neural network model. Certainly, the eye bag ROI may be annotated in the to-be-detected image, and the annotated to-be-detected image is input into the preset convolutional neural network model.

Optionally, because eyes of a person are left-right symmetric, the eye bag ROI is also left-right symmetric, and the eye bag ROI includes a left eye bag ROI and a right eye bag ROI. Therefore, to facilitate recognition by the preset convolutional neural network model, the to-be-detected image may be segmented based on the left eye bag ROI and the right eye bag ROI to obtain a left eye bag ROI image and a right eye bag ROI image. Mirroring processing is performed on the right eye bag ROI image along a left-right direction; and the left eye bag ROI image and the right eye bag ROI image on which mirroring processing is performed are input to the preset convolutional neural network model.

Certainly, if the to-be-detected image is an image that includes only the eye bag ROI, the foregoing S702 and S703 may not be performed, that is, at least one of S704 and S708 may be directly performed after S701, to separately detect an eye bag or a lying silkworm, or detect an eye bag and a lying silkworm simultaneously.

S704. Perform eye bag detection on the eye bag ROI by using the preset convolutional neural network model, to obtain an eye bag detection score and eye bag position detection information.

When the preset convolutional neural network model is a single-task learning network, the eye bag ROI may be detected by using two convolutional neural network models (which may be denoted as first and second convolutional neural network models respectively) separately, to obtain the eye bag detection score and the eye bag position detection information. When the preset convolutional neural network model is a single-target multi-task learning network, eye bag detection may be performed on the eye bag ROI by using one convolutional neural network model (which may be denoted as a third convolutional neural network model), to obtain the eye bag detection score and the eye bag position detection information. When the preset convolutional neural network model is a multi-target multi-task learning network, eye bag detection and lying silkworm detection may be performed on the eye bag ROI by using one convolutional neural network model, to obtain a lying silkworm detection classification result and lying silkworm position detection information. In other words, S704 and S708 may be performed by using a same convolutional neural network model, or may be performed by using a plurality of convolutional neural network models, and there is no limitation on a sequence of the two steps.

S705. Determine whether the eye bag detection score is within a preset score range; and if yes, perform S706; or else, perform S707.

A comparison may be made between the eye bag detection score and the preset score range to determine whether the eye bag detection score falls within the preset score range. Assuming that the preset score range is less than a score threshold, if the eye bag detection score is greater than or equal to the score threshold, a skin health status of the eye bag region of the user may be good, and no eye bag exists. However, if the eye bag detection score is less than the score threshold, that is, if the eye bag detection score is within the preset score range, the skin health status of the eye bag region of the user may be relatively poor, and an eye bag exists.

S706. Annotate the eye bag in the to-be-detected image based on the eye bag detection score and the eye bag position detection information to obtain eye bag annotation information.

When it is determined that an eye bag exists, on one hand, the eye bag in the to-be-detected image may be annotated based on the eye bag position detection information, so that position information of the eye bag is accurately and visually displayed to the user; on the other hand, the eye bag in the to-be-detected image may be annotated based on the eye bag detection score, so that a severity status of the current eye bag is accurately displayed to the user and that the user can perform skin care, adjust a daily schedule in time, or the like.

The eye bag annotation information is used to display the eye bag detection score and eye bag position to the user when the eye bag exists.

It can be learned from the foregoing description that the eye bag position detection information may include eye bag key points or an eye bag segmentation mask. Therefore, a manner of annotating the eye bag in the to-be-detected image herein may also correspondingly include two cases.

In one annotation manner, when the eye bag position detection information includes the eye bag key points, interpolation fitting may be performed based on the eye bag key points to obtain an eye bag closed region; and the eye bag in the to-be-detected image is annotated based on the eye bag detection score and the eye bag closed region.

Interpolation is a function for continuously complementing differences on a basis of discrete data, so that an obtained continuous curve can pass through all given discrete data points. Fitting is to connect given points by using a smooth curve. In the image processing field, interpolation fitting can be used to determine, based on a given plurality of pixels, a closed region enclosed by the plurality of pixels. In this embodiment of this application, the eye bag key points are key points of an eye bag contour, and interpolation fitting processing may be performed on the eye bag key points to obtain the eye bag closed region.

It should be noted that, when interpolation fitting processing is performed on the eye bag key points, any difference fitting method may be selected. The difference fitting method is not specifically limited in this embodiment of this application.

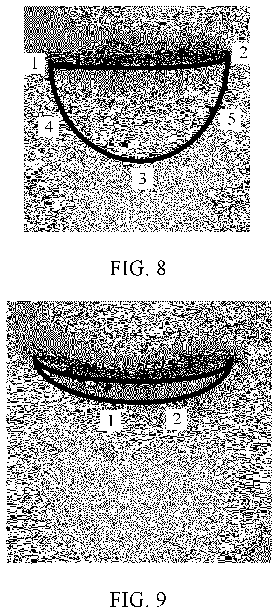

For example, interpolation fitting processing may be performed on the eye bag key points shown in FIG. 5 to obtain the eye bag closed region, as shown in FIG. 8.

It should be noted that, to facilitate understanding of a relationship between the eye bag key points and the eye bag closed region, the eye bag key points are still retained in FIG. 8, but in an actual application, when the to-be-detected image is annotated by using the eye bag closed region, the eye bag key points may be deleted.

In the other annotation manner, because the eye bag segmentation mask has accurately covered the region in which the eye bag is located, when the eye bag position detection information includes the eye bag segmentation mask, the eye bag in the to-be-detected image may be annotated directly based on the eye bag detection score and the eye bag segmentation mask.

Optionally, it may be learned from the foregoing description that, before the right eye bag ROI image is detected, mirroring processing is performed on the right eye bag ROI image along the left-right direction. In this case, when detection is completed and the to-be-detected image is annotated, the left eye bag ROI image and the right eye bag ROI image on which mirroring processing is performed may be annotated, and mirroring processing is performed on the annotated right eye bag ROI image again along the left-right direction to restore the right eye bag ROI image, so that the user can view a detection result.

It should be noted that the eye bag detection score and the eye bag closed region may be annotated in the same to-be-detected image simultaneously. Alternatively, the to-be-detected image may be copied and two same to-be-detected images are obtained, and then either of the eye bag detection score and the eye bag closed region is annotated in one to-be-detected image.

It should also be noted that the operation of annotating the eye bag in the to-be-detected image based on the eye bag detection score or the eye bag position detection information to obtain the eye bag annotation information herein may be directly adding the eye bag detection score or the eye bag position detection information to the to-be-detected image, including adding in a form of pixels to the to-be-detected image (that is, directly generating text information in the to-be-detected image) or adding in a form of attribute information to attribute information of the to-be-detected image; or may be separately storing the eye bag detection score and the eye bag position detection information, and establishing an association relationship between the eye bag detection score and the to-be-detected image and an association relationship between the eye bag position detection information and the to-be-detected image.

The attribute information of the to-be-detected image may be used to describe attribute information such as a photographing parameter of the to-be-detected image. For example, an exchangeable image file format (Exchangeable image file format, EXif) may be included.

S707. Display an eye bag detection result on an interface.

The interface may include a display of a terminal or an interface in a display. When performing eye bag detection according to the foregoing method and obtaining the detection result, the terminal may display the detection result on the display of the terminal, or certainly may send the detection result to another display (for example, a smart television) for displaying. A manner of displaying the eye bag detection result is not specifically limited in this embodiment of this application.

When the eye bag detection score is within the preset score range threshold (that is, the eye bag exists), the displayed eye bag detection result may include the to-be-detected image. The user may directly view the eye bag detection score and the eye bag position detection information in the to-be-detected image, or may view the eye bag detection score and the eye bag position detection information in the attribute information of the to-be-detected image, or may obtain the eye bag detection score and the eye bag position detection information from the association relationship between the eye bag detection score and the to-be-detected image and the association relationship between the eye bag position detection information and the to-be-detected image.

It should be noted that, during displaying, the to-be-detected image, the eye bag detection score, and the eye bag position detection information may be displayed in a same display area or may be separately displayed in different display areas. For example, the annotated to-be-detected image may be displayed in one display area (the to-be-detected image includes the eye bag position detection information annotated in the form of pixels) and the eye bag detection score may be separately displayed in another display area. A manner of setting the display area is not specifically limited in this embodiment of this application.

It should also be noted that, when the eye bag annotation information is displayed, a personalized skin care suggestion may be further provided for the user, for example, reminding the user to have a rest or use a skin care product for eliminating or alleviating the eye bag.

When the eye bag detection score is not within the preset score range, the eye bag detection result may include the eye bag detection score. Certainly, the to-be-detected image may alternatively be annotated by using the eye bag detection score in a manner similar to that when the eye bag exists, and displayed in a manner similar to that when the eye bag exists.

S708. Perform lying silkworm detection on the eye bag ROI by using the preset convolutional neural network model, to obtain a lying silkworm detection classification result and lying silkworm position detection information.

It should be noted that a manner of performing lying silkworm detection on the eye bag ROI by using the preset convolutional neural network model may be similar to the manner of performing eye bag detection on the eye bag ROI by using the preset convolutional neural network model. Details are not described herein again.

For example, the eye bag ROI may be detected by using two convolutional neural network models (which may be denoted as fourth and fifth convolutional neural network models respectively) separately, to obtain the lying silkworm detection classification result and the lying silkworm position detection information. When the preset convolutional neural network model is a single-target multi-task learning network, the eye bag ROI may be detected by using one convolutional neural network model (which may be denoted as a sixth convolutional neural network model), to obtain the lying silkworm detection classification result and the lying silkworm position detection information.

A lying silkworm detection result may be represented by 1 or 0, where 1 indicates that a lying silkworm exists, and 0 indicates that no lying silkworm exists.

S709. Determine whether a lying silkworm exists; and if yes, perform S710; or else, perform S711.

Whether a lying silkworm exists may be determined based on the lying silkworm detection result.

S710. Annotate the lying silkworm in the to-be-detected image based on the lying silkworm detection classification result and the lying silkworm position detection information, to obtain lying silkworm annotation information.

Similar to the manner of annotating the to-be-detected image based on the eye bag detection score and the eye bag position detection information, the following two manners may be used to annotate the to-be-detected image.

In one annotation manner, when the lying silkworm position detection information includes lying silkworm key points, interpolation fitting may be performed based on the lying silkworm key points to obtain a lying silkworm closed region; and the lying silkworm in the to-be-detected image is annotated based on the lying silkworm detection classification result and the lying silkworm closed region.

For example, interpolation fitting processing is performed on the lying silkworm key points shown in FIG. 6 to obtain the lying silkworm closed region, as shown in FIG. 9. Similarly, to facilitate understanding of a relationship between the lying silkworm key points and the lying silkworm closed region, the lying silkworm key points are still retained in FIG. 9, but in an actual application, when the to-be-detected image is annotated by using the lying silkworm closed region, the lying silkworm key points may be deleted.

In the other annotation manner, when the lying silkworm position detection information includes a lying silkworm segmentation mask, the lying silkworm in the to-be-detected image may be annotated based on the lying silkworm detection classification result and the lying silkworm segmentation mask.

It should be noted that the lying silkworm detection classification result and the lying silkworm closed region may be annotated in the same to-be-detected image simultaneously. Alternatively, the to-be-detected image may be copied and two same to-be-detected images are obtained, and then either of the lying silkworm detection classification result and the eye bag closed region is annotated in one to-be-detected image.

It should also be noted that the operation of annotating the lying silkworm in the to-be-detected image based on the lying silkworm detection classification result and the lying silkworm position detection information herein may be directly adding the lying silkworm detection classification result and the lying silkworm position detection information to the to-be-detected image; or may be separately storing the lying silkworm detection classification result and the lying silkworm position detection information, and establishing an association relationship between the lying silkworm detection classification result and the to-be-detected image and an association relationship between the lying silkworm position detection information and the to-be-detected image.

S711. Display the lying silkworm detection result on an interface.

It should be noted that a manner of displaying the lying silkworm detection result on the interface may be the same as the manner of displaying the eye bag detection result on the interface. Details are not described herein again.

When the lying silkworm detection classification result is yes, the displayed lying silkworm detection result may include the to-be-detected image. The user may directly view the lying silkworm detection classification result and the lying silkworm position detection information in the to-be-detected image; or may view the lying silkworm detection classification result and the lying silkworm position detection information in the attribute information of the to-be-detected image; or may obtain the lying silkworm detection classification result and the lying silkworm position detection information from the association relationship between the lying silkworm detection classification result and the to-be-detected image and the association relationship between the lying silkworm position detection information and the to-be-detected image.

When the lying silkworm detection classification result is no, the displayed lying silkworm detection result may include the lying silkworm detection classification result. Certainly, the to-be-detected image may be annotated by using the lying silkworm detection classification result in a manner similar to that when the lying silkworm detection classification result is yes, and displayed in a manner similar to that when the lying silkworm detection classification result is yes.

In addition, because the eye bag and the lying silkworm may be detected simultaneously, in some other embodiments, the eye bag detection score, the eye bag closed region, the lying silkworm detection classification result, and the lying silkworm closed region may be annotated in the to-be-detected image simultaneously. The annotated to-be-detected image may be used as both the eye bag annotation information and the lying silkworm annotation information. Correspondingly, S707 and S711 may be combined into one step.

In this embodiment of this application, the to-be-detected image including the eye bag ROI may be obtained, and then the eye bag ROI is directly detected by using the preset convolutional neural network model, to obtain the eye bag detection score and the eye bag position detection information. When the eye bag detection score is within the preset score range, that is, when it is determined that an eye bag exists, the to-be-detected image may be annotated by using the eye bag detection score and the eye bag position detection information, to obtain the eye bag annotation information for eye bag detection. Because the eye bag detection score and the eye bag position detection information herein are directly obtained from eye bag ROI recognition, instead of being set based on a size and shape of an eye, accuracy of eye bag detection can be significantly improved.

In an actual test, different models are used in four light source environments: 4000K 100 Lux, 4000K 300 Lux, white light, and yellow light. An intersection over union (Intersection over Union, IOU) of sizes of the detected lying silkworm closed region and an actual (or annotated) lying silkworm closed region reaches 72.54%. An IOU of sizes of the detected eye bag closed region and an actual (or annotated) eye bag closed region reaches 77%. An eye bag score correlation coefficient in a single environment reaches 88%. A correlation coefficient in a plurality of environments reaches 87.6%. A lowest standard deviation of scores in the single environment may reach 1.44. A standard deviation in the plurality of environments is 1.66. Generally, if the standard deviation is less than 2 in the single environment and less than 3 in the plurality of environments, it is considered that a requirement is satisfied. Therefore, an experimental result of the eye bag detection method provided in this embodiment of this application far exceeds the requirement.

The IOU is a standard performance metric for an object category segmentation problem. In this embodiment of this application, a larger value indicates that the detected lying silkworm closed region (or detected eye bag region) is closer to the actual lying silkworm closed region (or detected eye bag region), that is, accuracy of detection is higher The eye bag score correlation coefficient is a correlation coefficient between the eye bag detection score and the eye bag annotation score. A higher correlation coefficient indicates higher accuracy of eye bag detection.

Based on a same inventive concept, as an implementation of the foregoing method, an embodiment of this application provides an eye bag detection apparatus, a lying silkworm detection apparatus, and a convolutional neural network model training apparatus. The apparatus embodiment corresponds to the foregoing method embodiment. For ease of reading, details in the foregoing method embodiment are not described in the apparatus embodiment. However, it should be clear that the apparatus in this embodiment can correspondingly implement all content of the foregoing method embodiment.

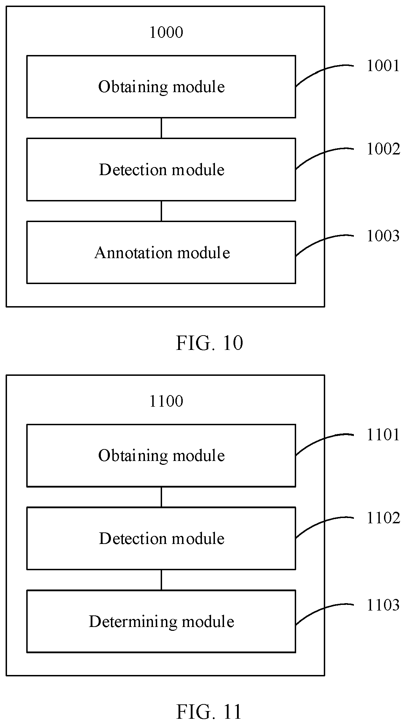

FIG. 10 is a schematic diagram of a structure of an eye bag detection apparatus 1000 according to an embodiment of this application. As shown in FIG. 10, the eye bag detection apparatus 1000 provided in this embodiment includes:
an obtaining module 1001, configured to obtain a to-be-detected image, where the to-be-detected image includes an eye bag ROI;
a detection module 1002, configured to detect the eye bag ROI by using a preset convolutional neural network model, to obtain an eye bag detection score and eye bag position detection information; and
an annotation module 1003, configured to annotate an eye bag in the to-be-detected image based on the eye bag detection score and the eye bag position detection information when the eye bag detection score is within a preset score range, to obtain eye bag annotation information.

Optionally, the apparatus further includes a determining module, where
the detection module is further configured to perform facial key point detection on the to-be-detected image to obtain eye key points; and
the determining module is configured to determine the eye bag ROI from the to-be-detected image based on the eye key points.

Optionally, the determining module is further configured to:
determine eye center points based on the eye key points; and
obtain, by using the eye center points as reference points, a region of a preset size and a preset shape from the to-be-detected image as the eye bag ROI.

Optionally, the eye center points are located in an upper half part of the eye bag ROI and are located at 1/2 of a width and 1/4 of a height of the eye bag ROI.

Optionally, the detection module is further configured to detect the eye bag ROI by using the preset convolutional neural network model, to obtain a lying silkworm detection classification result and lying silkworm position detection information; and
the annotation module is further configured to annotate a lying silkworm in the to-be-detected image based on the lying silkworm detection classification result and the lying silkworm position detection information when the lying silkworm detection classification result is yes, to obtain lying silkworm annotation information.

Optionally, the eye bag position detection information includes eye bag key points, and the annotation module is further configured to:
perform interpolation fitting based on the eye bag key points to obtain an eye bag closed region; and
annotate the eye bag in the to-be-detected image based on the eye bag detection score and the eye bag closed region.

Optionally, the eye bag position detection information includes an eye bag segmentation mask, and the annotation module is further configured to:
annotate the eye bag in the to-be-detected image based on the eye bag detection score and the eye bag segmentation mask.

Optionally, the lying silkworm position detection information includes lying silkworm key points, and the annotation module is further configured to:
perform interpolation fitting based on the lying silkworm key points to obtain a lying silkworm closed region; and
annotate the lying silkworm in the to-be-detected image based on the lying silkworm detection classification result and the lying silkworm closed region.

Optionally, the lying silkworm position detection information includes a lying silkworm segmentation mask, and the annotation module is further configured to:
annotate the lying silkworm in the to-be-detected image based on the lying silkworm detection classification result and the lying silkworm segmentation mask.

Optionally, the preset convolutional neural network model includes a plurality of convolution layers, and other convolution layers than a first convolution layer include at least one depthwise separable convolution layer.

Optionally, the preset convolutional neural network model is obtained by training a plurality of sample images, where the sample image carries an eye bag annotation score and eye bag position annotation information.

Optionally, the sample image further carries a lying silkworm annotation score and lying silkworm position annotation information.

Optionally, the eye bag ROI includes a left eye bag ROI and a right eye bag ROI, and the apparatus further includes:
a segmentation module, configured to segment the to-be-detected image based on the left eye bag ROI and the right eye bag ROI to obtain a left eye bag ROI image and a right eye bag ROI image;
a mirroring module, configured to perform mirroring processing on the right eye bag ROI image along a left-right direction; and
an input module, configured to input the left eye bag ROI image and the right eye bag ROI image on which mirroring processing is performed to the preset convolutional neural network model.

Optionally, the annotation module is further configured to:
annotate the left eye bag ROI image and the right eye bag ROI image on which mirroring processing is performed; and
perform mirroring processing on the annotated right eye bag ROI image along the left-right direction again.

The eye bag detection apparatus provided in this embodiment can perform the foregoing method embodiment. Implementation principles and technical effects thereof are similar to those of the method embodiment, and are not described herein.

FIG. 11 is a schematic diagram of a structure of a convolutional neural network model training apparatus 1100 according to an embodiment of this application. As shown in FIG. 11, the convolutional neural network model training apparatus 1100 provided in this embodiment includes:
an obtaining module 1101, configured to obtain a plurality of sample images, where the sample image includes an eye bag ROI, and the sample image carries an eye bag annotation score and eye bag position annotation information;
a detection module 1102, configured to detect the eye bag ROI by using a convolutional neural network model, to obtain an eye bag detection score and eye bag position detection information; and
a determining module 1103, configured to determine model parameters of the convolutional neural network model based on the eye bag detection score, the eye bag position detection information, the eye bag annotation score, and the eye bag position annotation information of the sample image.

Optionally, the sample image further carries a lying silkworm annotation classification result and lying silkworm position annotation information;
the detection module is further configured to detect the eye bag ROI by using the convolutional neural network model, to obtain a lying silkworm detection classification result and lying silkworm position detection information; and
the determining module is further configured to determine the model parameters of the convolutional neural network model based on the eye bag detection score, the eye bag position detection information, the eye bag annotation score, the eye bag position annotation information, the lying silkworm annotation classification result, the lying silkworm position annotation information, the lying silkworm detection classification result, and the lying silkworm position detection information of the sample image.

The convolutional neural network model training apparatus provided in this embodiment can perform the foregoing method embodiment. Implementation principles and technical effects thereof are similar to those of the method embodiment, and are not described herein.

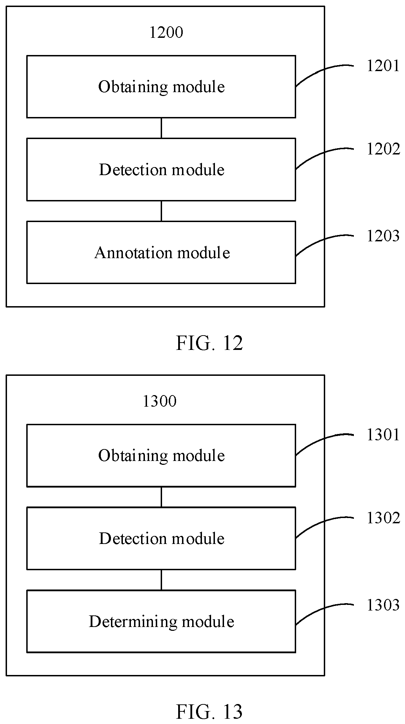

FIG. 12 is a schematic diagram of a structure of a lying silkworm detection apparatus 1200 according to an embodiment of this application. As shown in FIG. 12, the lying silkworm detection apparatus 1200 provided in this embodiment includes:
an obtaining module 1201, configured to obtain a to-be-detected image, where the to-be-detected image includes an eye bag ROI;
a detection module 1202, configured to detect the eye bag ROI by using a preset convolutional neural network model, to obtain a lying silkworm detection classification result and lying silkworm position detection information; and
an annotation module 1203, configured to annotate a lying silkworm in the to-be-detected image based on the lying silkworm detection classification result and the lying silkworm position detection information when the lying silkworm detection classification result is yes, to obtain lying silkworm annotation information.

The convolutional neural network model training apparatus provided in this embodiment can perform the foregoing method embodiment. Implementation principles and technical effects thereof are similar to those of the method embodiment, and are not described herein.

FIG. 13 is a schematic diagram of a structure of a convolutional neural network model training apparatus 1300 according to an embodiment of this application. As shown in FIG. 13, the convolutional neural network model training apparatus 1300 provided in this embodiment includes:
an obtaining module 1301, configured to obtain a plurality of sample images, where the sample image includes an eye bag ROI, and the sample image carries a lying silkworm annotation classification result and lying silkworm position annotation information;
a detection module 1302, configured to detect the eye bag ROI by using a convolutional neural network model, to obtain a lying silkworm detection classification result and lying silkworm position detection information; and
a determining module 1303, configured to determine model parameters of the convolutional neural network model based on the lying silkworm annotation classification result, the lying silkworm position annotation information, the lying silkworm detection classification result, and the lying silkworm position detection information of the sample image.

The convolutional neural network model training apparatus provided in this embodiment can perform the foregoing method embodiment. Implementation principles and technical effects thereof are similar to those of the method embodiment, and are not described herein.

It may be clearly understood by a person skilled in the art that, for the purpose of convenient and brief description, division of the foregoing functional units or modules is used as an example for illustration. In actual application, the foregoing functions can be allocated to different functional units or modules and implemented according to a requirement, that is, an inner structure of an apparatus is divided into different functional units or modules to implement all or some of the functions described above. Functional units and modules in this embodiment may be integrated into one processing unit, or each of the units may exist alone physically, or two or more units are integrated into one unit. The integrated unit may be implemented in a form of hardware, or may be implemented in a form of a software functional unit. In addition, specific names of the functional units and modules are merely used to distinguish each other, and are not used to limit the protection scope of this application. For detailed working processes of the units and modules in the foregoing system, refer to the corresponding processes in the foregoing method embodiment. Details are not described herein again.

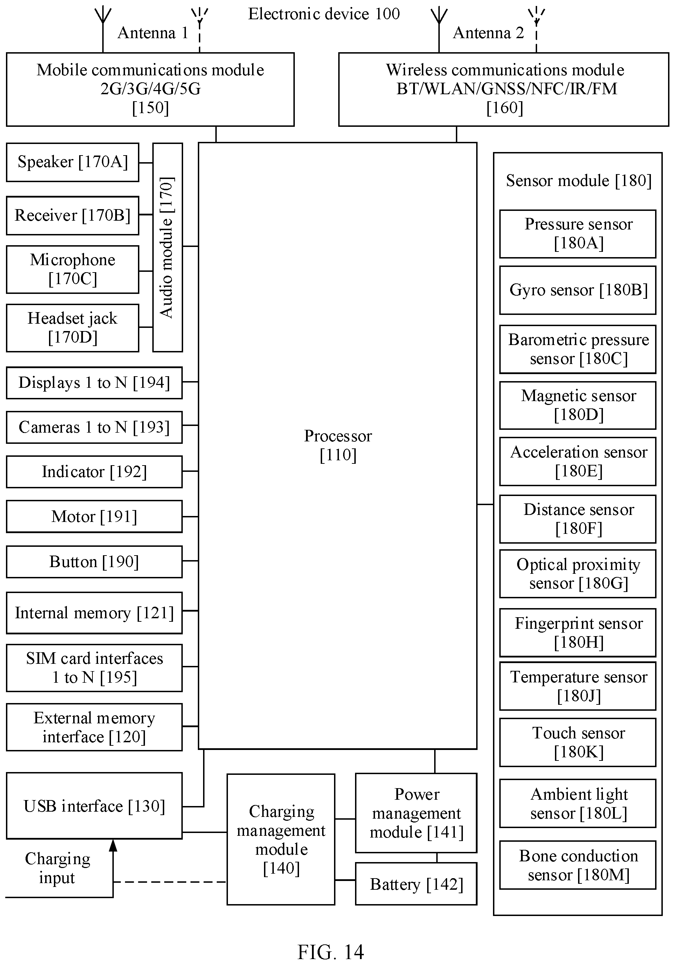

FIG. 14 is a schematic diagram of a structure of a terminal 100 according to an embodiment of this application. The terminal 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communications module 150, a wireless communications module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure illustrated in this embodiment of this application does not constitute a specific limitation on the terminal 100. In some other embodiments of this application, the terminal 100 may include more or fewer components than those shown in the figure, combine some components, split some components, or have different component arrangements. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent devices, or may be integrated into one or more processors.

The controller may be a nerve center and a command center of the terminal 100. The controller may generate an operation control signal based on an instruction operation code and a time sequence signal, to complete control of instruction fetching and instruction execution.

A memory may be further disposed in the processor 110, and is configured to store instructions and data. In some embodiments, the memory in the processor 110 is a cache. The memory may store instructions or data that has been used or is cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (derail clock line, SCL). In some embodiments, the processor 110 may include a plurality of groups of I2C buses. The processor 110 may be separately coupled to the touch sensor 180K, a charger, a flashlight, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the terminal 100.

The I2S interface may be used for audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communications module 160 through the I2S interface, to implement a function of answering a call by using a Bluetooth headset.

The PCM interface may also be used for audio communication, and analog signal sampling, quantization, and coding. In some embodiments, the audio module 170 may be coupled to the wireless communications module 160 through a PCM bus interface. In some embodiments, the audio module 170 may alternatively transmit an audio signal to the wireless communications module 160 through the PCM interface, to implement a function of answering a call through a Bluetooth headset. Both the I2S interface and the PCM interface may be used for audio communication.

The UART interface is a universal serial data bus, and is used for asynchronous communication. The bus may be a two-way communications bus. The bus converts to-be-transmitted data between serial communication and parallel communication. In some embodiments, the UART interface is usually used to connect the processor 110 to the wireless communications module 160. For example, the processor 110 communicates with a Bluetooth module in the wireless communications module 160 through the UART interface, to implement a Bluetooth function. In some embodiments, the audio module 170 may transmit an audio signal to the wireless communications module 160 through the UART interface, to implement a function of playing music by using a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 by using a CSI interface, to implement a photographing function of the terminal 100. The processor 110 communicates with the display 194 by using a DSI interface, to implement a display function of the terminal 100.

The GPIO interface may be configured by using software. The GPIO interface may be configured as a control signal, or may be configured as a data signal. In some embodiments, the GPIO interface may be configured to connect the processor 110 to the camera 193, the display 194, the wireless communications module 160, the audio module 170, the sensor module 180, or the like. The GPIO interface may be further configured as the I2C interface, the I2S interface, the UART interface, the MIPI interface, or the like.

The USB interface 130 is an interface that conforms to a USB standard specification, and may be specifically a mini USB interface, a micro USB interface, a USB Type C interface, or the like. The USB interface 130 may be configured to connect to a charger to charge the terminal 100, or may be configured to transmit data between the terminal 100 and a peripheral device, or may be configured to connect to a headset, to play audio by using the headset. The interface may be further configured to connect to another terminal, for example, an AR device.

It may be understood that an interface connection relationship between the modules illustrated in this embodiment of this application is only for schematic illustration, and does not constitute a limitation on the structure of the terminal 100. In some other embodiments of this application, the terminal 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input from a wired charger through the USB interface 130. In some embodiments of wireless charging, the charging management module 140 may receive a wireless charging input through a wireless charging coil of the terminal 100. When charging the battery 142, the charging management module 140 may further supply power to the terminal by using the power management module 141.

The power management module 141 is configured to connect to the battery 142, the charging management module 140, and the processor 110. The power management module 141 receives an input of the battery 142 and/or the charging management module 140, and supplies power to the processor 110, the internal memory 121, an external memory, the display 194, the camera 193, the wireless communications module 160, and the like. The power management module 141 may be configured to monitor parameters such as a battery capacity, a battery cycle count, and a battery state of health (electric leakage and impedance). In some other embodiments, the power management module 141 may alternatively be disposed in the processor 110. In some other embodiments, the power management module 141 and the charging management module 140 may alternatively be disposed in a same component.

A wireless communication function of the terminal 100 may be implemented by using the antenna 1, the antenna 2, the mobile communications module 150, the wireless communications module 160, the modem processor, the baseband processor, and the like.

The antenna 1 and the antenna 2 are configured to transmit and receive an electromagnetic wave signal. Each antenna in the terminal 100 may be configured to cover one or more communication frequency bands. Different antennas may be further multiplexed, to improve antenna utilization. For example, the antenna 1 may be multiplexed as a diversity antenna in a wireless local area network. In some other embodiments, an antenna may be used in combination with a tuning switch.

The mobile communications module 150 may provide a wireless communications solution applied to the terminal 100 and including 2G/3G/4G/5G or the like. The mobile communications module 150 may include at least one filter, a switch, a power amplifier, a low noise amplifier (low noise amplifier, LNA), and the like. The mobile communications module 150 may receive an electromagnetic wave through the antenna 1, perform processing such as filtering or amplification on the received electromagnetic wave, and transmit the electromagnetic wave to the modem processor for demodulation. The mobile communications module 150 may further amplify a signal modulated by the modem processor, and convert the signal into an electromagnetic wave for radiation through the antenna 1. In some embodiments, at least some functional modules of the mobile communications module 150 may be disposed in the processor 110. In some embodiments, at least some functional modules of the mobile communications module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The baseband processor processes the low-frequency baseband signal, and then transfers an obtained signal to the application processor. The application processor outputs a sound signal by using an audio device (which is not limited to the speaker 170A, the receiver 170B, and the like), or displays an image or a video on the display 194. In some embodiments, the modem processor may be an independent component. In some other embodiments, the modem processor may be independent of the processor 110, and is disposed in the same device as the mobile communications module 150 or another functional module.

The wireless communications module 160 may provide a wireless communication solution that is applied to the terminal 100, and that includes a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communications module 160 may be one or more components integrating at least one communications processor module. The wireless communications module 160 receives an electromagnetic wave through the antenna 2, performs frequency modulation and filtering processing on an electromagnetic wave signal, and sends a processed signal to the processor 110. The wireless communications module 160 may further receive a to-be-sent signal from the processor 110, perform frequency modulation and amplification on the signal, and convert the signal into an electromagnetic wave for radiation through the antenna 2.

In some embodiments, the antenna 1 of the terminal 100 is coupled to the mobile communications module 150, and the antenna 2 is coupled to the wireless communications module 160, so that the terminal 100 can communicate with a network and another device by using a wireless communications technology. The wireless communications technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or satellite based augmentation systems (satellite based augmentation systems, SBAS).

The terminal 100 implements the display function by using the GPU, the display 194, the application processor, and the like. The GPU is a microprocessor for image processing, and is connected to the display 194 and the application processor. The GPU is configured to: perform mathematical and geometric calculation, and render an image. The processor 110 may include one or more GPUs that execute program instructions to generate or change display information.

The display 194 is configured to display an image, a video, or the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a mini-LED, a micro-LED, a micro-OLED, a quantum dot light emitting diode (quantum dot light emitting diode, QLED), or the like. In some embodiments, the terminal 100 may include one or N displays 194, where N is a positive integer greater than 1.

The terminal 100 can implement a photographing function by using the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP for converting the electrical signal into a digital image signal. The ISP outputs the digital image signal to the DSP for processing. The DSP converts the digital image signal into an image signal in a standard format, for example, RGB or YUV. In some embodiments, the terminal 100 may include one or N cameras 193, where N is a positive integer greater than 1.

The digital signal processor is configured to process a digital signal, and may process another digital signal in addition to the digital image signal. For example, when the terminal 100 selects a frequency, the digital signal processor is configured to perform a Fourier transform or the like on energy of the frequency.

The video codec is configured to compress or decompress a digital video. The terminal 100 may support one or more video codecs. Therefore, the terminal 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information with reference to a structure of a biological neural network, for example, a transfer mode between human brain neurons, and may further continuously perform self-learning. Applications such as intelligent cognition of the terminal 100, for example, image recognition, facial recognition, speech recognition, and text understanding, may be implemented through the NPU.

The external memory interface 120 may be used to connect to an external storage card, for example, a micro SD card, to extend a storage capability of the terminal 100. The external storage card communicates with the processor 110 through the external memory interface 120, to implement a data storage function. For example, files such as music and a video are stored in the external storage card.

The internal memory 121 may be configured to store computer-executable program code. The executable program code includes instructions. The processor 110 implements various function applications and data processing of the terminal 100 by running the instructions stored in the internal memory 121. The internal memory 121 may include a program storage area and a data storage area. The program storage area may store an operating system, an application required by at least one function (for example, a sound playing function or an image playing function), and the like. The data storage area may store data (such as audio data and a phone book) created in use of the terminal 100. In addition, the internal memory 121 may include a high-speed random access memory, and may further include a nonvolatile memory, for example, at least one magnetic disk storage device, a flash memory device, or a universal flash storage (universal flash storage, UFS).

The terminal 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal output, and is also configured to convert an analog audio input into a digital audio signal. The audio module 170 may be further configured to: code and decode an audio signal. In some embodiments, the audio module 170 may be disposed in the processor 110, or some functional modules of the audio module 170 are disposed in the processor 110.

The speaker 170A, also referred to as a "loudspeaker", is configured to convert an audio electrical signal into a sound signal. The terminal 100 may listen to music or receive a speakerphone call by using the speaker 170A.

The receiver 170B, also referred to as an "earpiece", is configured to convert an electrical audio signal into a sound signal. When the terminal 100 receives a call or speech information, the terminal 100 may listen to a speech by placing the receiver 170B near an ear.

The microphone 170C, also referred to as a "mike" or a "mic", is configured to convert a sound signal into an electrical signal. When making a call or sending speech information, a user may place the mouth of the user near the microphone 170C to make a sound, to input a sound signal to the microphone 170C. At least one microphone 170C may be disposed on the terminal 100. In some other embodiments, two microphones 170C may be disposed in the terminal 100, to collect a sound signal and further implement a noise reduction function. In some other embodiments, three, four, or more microphones 170C may alternatively be disposed in the terminal 100, to collect a sound signal, implement noise reduction, identify a sound source, implement a directional recording function, and the like.

The headset jack 170D is configured to connect to a wired headset. The headset jack 170D may be the USB interface 130 or a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The terminal 100 determines intensity of pressure based on the change of the capacitance. When a touch operation acts on the display 194, the terminal 100 detects intensity of the touch operation based on the pressure sensor 180A. The terminal 100 may also calculate a touch position based on a signal detected by the pressure sensor 180A. In some embodiments, touch operations that are performed at a same touch location but have different touch operation intensity may correspond to different operation instructions. For example, when a touch operation whose touch operation intensity is less than a first pressure threshold is performed on a Messages icon, an instruction for viewing an SMS message is executed. When a touch operation whose touch operation intensity is greater than or equal to the first pressure threshold is performed on the Messages icon, an instruction for creating a new SMS message is executed.

The gyro sensor 180B may be configured to determine a motion posture of the terminal 100. In some embodiments, an angular velocity of the terminal 100 about three axes (x, y, and z axes) may be determined by using the gyro sensor 180B. The gyro sensor 180B may be configured to implement image stabilization during photographing. For example, when the shutter is pressed, the gyro sensor 180B detects a shake angle of the terminal 100, and calculates, based on the angle, a distance for which a lens module needs to compensate, so that the lens cancels the shake of the terminal 100 through reverse motion, thereby implementing anti-shake. The gyro sensor 180B may be further used in a navigation scenario and a motion-sensing game scenario.

The barometric pressure sensor 180C is configured to measure barometric pressure. In some embodiments, the terminal 100 calculates an altitude based on a value of the barometric pressure measured by the barometric pressure sensor 180C, to assist in positioning and navigation.

The magnetic sensor 180D includes a Hall sensor. The terminal 100 may detect opening and closing of a flip cover by using the magnetic sensor 180D. In some embodiments, when the terminal 100 is a flip phone, the terminal 100 may detect the opening and closing of the flip cover based on the magnetic sensor 180D. Further, a feature such as automatic unlocking upon opening of the flip cover is set based on a detected opening or closing state of the flip cover.

The acceleration sensor 180E may detect magnitudes of accelerations of the terminal 100 in various directions (generally three axes). A magnitude and direction of gravity can be detected when the terminal 100 is stationary. The acceleration sensor 180E may be further configured to recognize a posture of the terminal, and applied to screen switching between portrait and landscape, a pedometer, and other applications.

The distance sensor 180F is configured to measure a distance. The terminal 100 may measure a distance by using infrared light or a laser. In some embodiments, in a photographing scene, the terminal 100 may measure the distance by using the distance sensor 180F, to implement fast focusing.

The optical proximity sensor 180G may include, for example, a light-emitting diode (LED) and an optical detector, for example, a photodiode. The light-emitting diode may be an infrared light-emitting diode. The terminal 100 emits infrared light by using the light-emitting diode. The terminal 100 detects infrared reflected light from a nearby object by using the photodiode. When sufficient reflected light is detected, the terminal 100 may determine that there is an object near the terminal 100. When insufficient reflected light is detected, the terminal 100 may determine that there is no object near the terminal 100. The terminal 100 may detect, by using the optical proximity sensor 180G, that the user holds the terminal 100 close to an ear for talking, to automatically turn off the screen and save power. The optical proximity sensor 180G may also be used in a leather case mode or a pocket mode to automatically unlock or lock the screen.

The ambient light sensor 180L is configured to sense ambient light brightness. The terminal 100 may adaptively adjust brightness of the display 194 based on the sensed ambient light brightness. The ambient light sensor 180L may also be configured to automatically adjust a white balance during photographing. The ambient light sensor 180L may further cooperate with the optical proximity sensor 180G to detect whether the terminal 100 is in a pocket, to avoid an unintentional touch.

The fingerprint sensor 180H is configured to collect a fingerprint. The terminal 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the terminal 100 executes a temperature processing strategy by using the temperature detected by the temperature sensor 180J. For example, when the temperature reported by the temperature sensor 180J exceeds a threshold, the terminal 100 degrades performance of a processor near the temperature sensor 180J, to reduce power consumption for thermal protection. In some other embodiments, the terminal 100 heats the battery 142 when the temperature is below another threshold, to reduce abnormal power-off of the terminal 100 due to a low temperature. In some other embodiments, the terminal 100 boosts an output voltage of the battery 142 when the temperature is below still another threshold, to reduce abnormal power-off due to a low temperature.

The touch sensor 180K is also referred to as a "touch panel". The touch sensor 180K may be disposed on the display 194, and the touch sensor 180K and the display 194 form a touchscreen. The touch sensor 180K is configured to detect a touch operation performed on or near the touch sensor. The touch sensor may transfer the detected touch operation to the application processor to determine a type of a touch event. A visual output related to the touch operation may be provided through the display 194. In some other embodiments, the touch sensor 180K may alternatively be disposed on a surface of the terminal 100 at a location different from a location of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a human pulse, and receive a blood pressure beating signal. In some embodiments, the bone conduction sensor 180M may alternatively be disposed in the headset, to constitute a bone conduction headset. The audio module 170 may obtain a voice signal through parsing based on the vibration signal that is of the vibration bone of the vocal-cord part and that is obtained by the bone conduction sensor 180M, to implement a voice function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The terminal 100 may receive an input from the button, and generate a button signal input related to a user setting and function control of the terminal 100.

The motor 191 may generate a vibration prompt. The motor 191 may be configured to produce an incoming call vibration prompt and a touch vibration feedback. For example, touch operations performed on different applications (for example, photographing and audio playing) may correspond to different vibration feedback effects. For touch operations performed on different areas of the display 194, the motor 191 may also correspond to different vibration feedback effects. Different application scenarios (for example, time reminding, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or pulled out of the SIM card interface 195, so that the SIM card is in contact with and separated from the terminal 100. The terminal 100 may support one or N SIM card interfaces, where N is a positive integer greater than 1. The SIM card interface 195 may support a nano-SIM card, a micro-SIM card, a SIM card, and the like. A plurality of cards may be simultaneously inserted into a same SIM card interface 195. The plurality of cards may be of a same type or of different types. The SIM card interface 195 is compatible with different types of SIM cards. The SIM card interface 195 is also compatible with an external storage card. The terminal 100 interacts with the network by using the SIM card, to implement a call function, a data communication function, and the like. In some embodiments, the terminal 100 uses an eSIM, that is, an embedded SIM card. The eSIM card may be embedded in the terminal 100, and cannot be separated from the terminal 100.

A software system of the terminal 100 may use a hierarchical architecture, an event-driven architecture, a microkernel architecture, a microservice architecture, or a cloud architecture. In this embodiment of this application, a software structure of the terminal 100 is described by using a hierarchical Android system as an example.

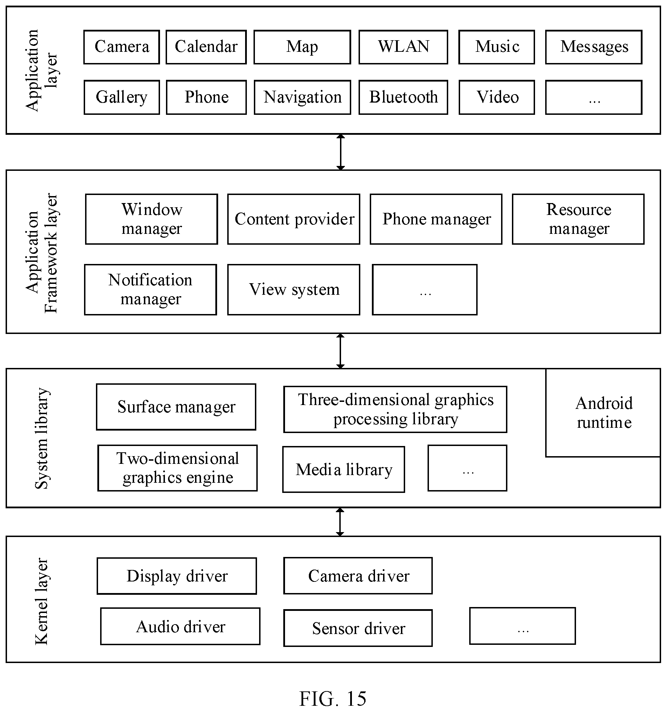

FIG. 15 is a block diagram of a software structure of a terminal 100 according to an embodiment of this application.

In a layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 15, the application packages may include applications such as camera, gallery, calendar, phone, map, navigation, WLAN, Bluetooth, music, video, and messaging.

The application framework layer provides an application programming interface (application programming interface, API) and a programming framework for an application at the application layer. The application framework layer includes some predefined functions.

As shown in FIG. 15, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like.

The content provider is configured to store and obtain data, and enable the data to be accessed by an application. The data may include a video, an image, audio, calls that are made and received, a browsing history and bookmarks, a phone book, and the like.

The view system includes visual controls, such as a control for displaying a text and a control for displaying an image. The view system may be configured to construct an application. A display interface may include one or more views. For example, a display interface including a notification icon of Messages may include a text display view and a picture display view.

The phone manager is configured to provide a communication function of the terminal 100, for example, management of a call status (including answering, declining, or the like).

The resource manager provides, for an application, various resources such as a localized character string, an icon, a picture, a layout file, and a video file.

The notification manager enables an application to display notification information in a status bar, and may be configured to transmit a notification-type message. The displayed information may automatically disappear after a short pause without user interaction. For example, the notification manager is configured to notify download completion, provide a message notification, and the like. The notification manager may alternatively be a notification that appears in a top status bar of the system in a form of a graph or a scroll bar text, for example, a notification of an application running on the background or a notification that appears on a screen in a form of a dialog window. For example, text information is prompted in the status bar, a prompt tone is generated, the terminal vibrates, or an indicator blinks.

The Android runtime includes a kernel library and a virtual machine. The Android runtime is responsible for scheduling and management of the Android system.

The kernel library includes two parts: a function that needs to be called in Java language, and a kernel library of Android.

The application layer and the application framework layer run on a virtual machine. The virtual machine executes Java files at the application layer and the application framework layer as binary files. The virtual machine is configured to perform functions such as object lifecycle management, stack management, thread management, security and exception management, and garbage collection.

The system library may include a plurality of functional modules, for example, a surface manager (surface manager), a media library (Media Libraries), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playing and recording of a plurality of commonly used audio and video formats, static image files, and the like. The media library supports a plurality of audio and video encoding formats, such as MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver

The following describes working processes of software and hardware of the terminal 100 by using an example with reference to a photo capturing scene.

When the touch sensor 180K receives a touch operation, a corresponding hardware interruption is sent to the kernel layer. The kernel layer processes the touch operation into an original input event (including information such as touch coordinates and a timestamp of the touch operation). The original input event is stored at the kernel layer. The application framework layer obtains the original input event from the kernel layer, and identifies a control corresponding to the input event. An example in which the touch operation is a touch tap operation, and a control corresponding to the tap operation is a control of a camera application icon is used. The camera application invokes an interface of the application framework layer to enable the camera application, then enables the camera driver by invoking the kernel layer, and captures a static image or a video through the camera 193.

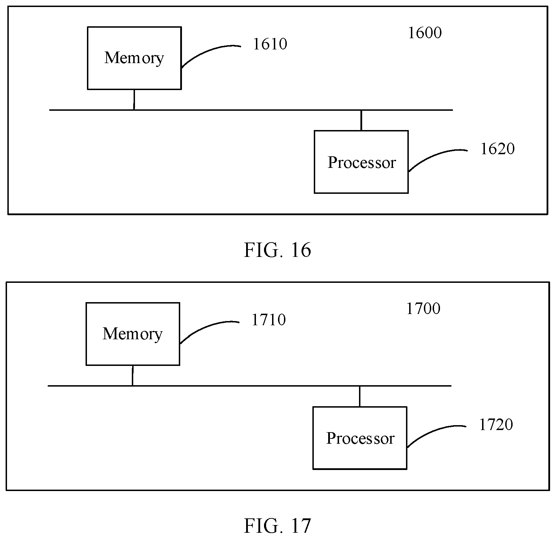

Based on the same inventive concept, an embodiment of this application further provides a terminal. FIG. 16 is a schematic diagram of a structure of a terminal 1600 according to an embodiment of this application. As shown in FIG. 16, the terminal 1600 provided in this embodiment includes a memory 1610 and a processor 1620. The memory 1610 is configured to store a computer program. The processor 1620 is configured to perform the method in the foregoing method embodiment when the computer program is invoked.

The terminal provided in this embodiment can perform the foregoing method embodiment to perform eye bag detection and/or lying silkworm detection. Implementation principles and technical effects thereof are similar to those of the method embodiment, and are not described herein.

An embodiment of this application further provides a computer-readable storage medium. The computer-readable storage medium stores a computer program, and when the computer program is executed by a processor, the method in the foregoing method embodiment is implemented to perform eye bag detection and/or lying silkworm detection, or perform convolutional neural network model training.

An embodiment of this application further provides a computer program product. When the computer program product runs on a terminal, the terminal is enabled to implement the method in the foregoing method embodiment to perform eye bag detection and/or lying silkworm detection, or perform convolutional neural network model training.

Based on the same inventive concept, an embodiment of this application further provides a server. FIG. 17 is a schematic diagram of a structure of a server 1700 according to an embodiment of this application. As shown in FIG. 17, the server 1700 provided in this embodiment includes a memory 1710 and a processor 1720. The memory 1710 is configured to store a computer program. The processor 1720 is configured to perform the method in the foregoing method embodiment when the computer program is invoked.

The server provided in this embodiment can perform the foregoing method embodiment to perform convolutional neural network model training. Implementation principles and technical effects thereof are similar to those of the method embodiment, and are not described herein.

An embodiment of this application further provides a computer-readable storage medium. The computer-readable storage medium stores a computer program, and when the computer program is executed by a processor, the method in the foregoing method embodiment is implemented to perform convolutional neural network model training.

An embodiment of this application further provides a computer program product. When the computer program product runs on a server, the server is enabled to implement the method in the foregoing method embodiment to perform convolutional neural network model training.

When the foregoing integrated unit is implemented in the form of a software functional unit and sold or used as an independent product, the integrated unit may be stored in a computer-readable storage medium. Based on such an understanding, all or a part of the processes of the method in the foregoing embodiment may be implemented by related hardware instructed by a computer program. The computer program may be stored in a computer-readable storage medium. When the computer program is executed by a processor, the steps of the foregoing method embodiment may be implemented. The computer program includes computer program code. The computer program code may be in a form of source code, object code, an executable file, some intermediate forms, or the like. The computer-readable storage medium may include at least any entity or apparatus capable of carrying computer program code to a photographing apparatus or terminal device, a recording medium, a computer memory, a read-only memory (Read-Only Memory, ROM), a random access memory (Random Access Memory, RAM), an electrical carrier signal, a telecommunication signal, and a software distribution medium, such as a USB flash drive, a removable hard disk, a magnetic disk, or an optical disc. According to legislation and patent practice in some jurisdictions, the computer-readable medium cannot be an electrical carrier signal or a telecommunication signal.

In the foregoing embodiments, the description of each embodiment has respective focuses. For a part that is not described in detail in an embodiment, refer to related descriptions in other embodiments.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

In embodiments provided in this application, it should be understood that the disclosed apparatus/ device and method may be implemented in other manners. For example, the described apparatus/device embodiment is merely an example. For example, the division of the modules or units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

It should be understood that when used in the specification of this application and the appended claims, the term "include" indicates presence of the described feature, entirety, step, operation, element, and/or component, but does not preclude presence or addition of one or more other features, entireties, steps, operations, elements, components, and/or sets thereof.

It should also be understood that the term " and/or" used in the specification of this application and the appended claims indicates any combination or all possible combinations of one or more associated listed items and includes such combinations.

As used in the specification of this application and the appended claims, the term "if' may be interpreted as "when", "once", "in response to determining", or "in response to detecting", depending on the context. Similarly, the phrase "if determining" or "if detecting [the described condition or event]" may be interpreted as "once determining", "in response to determining", "once detecting [the described condition or event]", or "in response to detecting [the described condition or event]", depending on the context.

In addition, in the description of the specification of this application and the appended claims, the terms "first", "second", "third", and the like are used only for distinguishing descriptions, but cannot be construed as indicating or implying relative importance.

Reference to "an embodiment", "some embodiments", or the like described in this specification of this application means that one or more embodiments of this application include a specific feature, structure, or characteristic described with reference to the embodiment. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

Finally, it should be noted that the foregoing embodiments are merely intended for describing the technical solutions of this application other than limiting this application. Although this application is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of embodiments of this application.

## Claims

1. An eye bag detection method, comprising:
obtaining a to-be-detected image, wherein the to-be-detected image comprises an eye bag region of interest ROI;
detecting the eye bag ROI by using a preset convolutional neural network model, to obtain an eye bag detection score and eye bag position detection information; and
when the eye bag detection score is within a preset score range, annotating an eye bag in the to-be-detected image based on the eye bag detection score and the eye bag position detection information, to obtain eye bag annotation information.

2. The method according to claim 1, wherein before the detecting the eye bag ROI by using a preset convolutional neural network model, the method further comprises:
performing facial key point detection on the to-be-detected image to obtain eye key points; and
determining the eye bag ROI from the to-be-detected image based on the eye key points.

3. The method according to claim 2, wherein the determining the eye bag ROI from the to-be-detected image based on the eye key points comprises:
determining eye center points based on the eye key points; and
obtaining, by using the eye center points as reference points, a region of a preset size and a preset shape from the to-be-detected image as the eye bag ROI.

4. The method according to claim 3, wherein the eye center points are located in an upper half part of the eye bag ROI and are located at 1/2 of a width and 1/4 of a height of the eye bag ROI.

5. The method according to claim 1, further comprising:
detecting the eye bag ROI by using the preset convolutional neural network model, to obtain a lying silkworm detection classification result and lying silkworm position detection information; and
when the lying silkworm detection classification result is yes, annotating a lying silkworm in the to-be-detected image based on the lying silkworm detection classification result and the lying silkworm position detection information to obtain lying silkworm annotation information.

6. The method according to claim 1, wherein the eye bag position detection information comprises eye bag key points, and the annotating an eye bag in the to-be-detected image based on the eye bag detection score and the eye bag position detection information comprises:
performing interpolation fitting based on the eye bag key points to obtain an eye bag closed region; and
annotating the eye bag in the to-be-detected image based on the eye bag detection score and the eye bag closed region.

7. The method according to claim 1, wherein the eye bag position detection information comprises an eye bag segmentation mask, and the annotating an eye bag in the to-be-detected image based on the eye bag detection score and the eye bag position detection information comprises:
annotating the eye bag in the to-be-detected image based on the eye bag detection score and the eye bag segmentation mask.

8. The method according to any one of claims 1 to 7, wherein the preset convolutional neural network model is obtained by training a plurality of sample images, wherein the sample image carries an eye bag annotation score and eye bag position annotation information.

9. The method according to any one of claims 1 to 7, wherein the preset convolutional neural network model comprises a plurality of convolution layers, and other convolution layers than a first convolution layer comprise at least one depthwise separable convolution layer

10. A convolutional neural network model training method, comprising:
obtaining a plurality of sample images, wherein the sample image comprises an eye bag ROI, and the sample image carries an eye bag annotation score and eye bag position annotation information;
detecting the eye bag ROI by using a convolutional neural network model, to obtain an eye bag detection score and eye bag position detection information; and
determining model parameters of the convolutional neural network model based on the eye bag detection score, the eye bag position detection information, the eye bag annotation score, and the eye bag position annotation information of the sample image.

11. The method according to claim 10, wherein the sample image further carries a lying silkworm annotation classification result and lying silkworm position annotation information, and the method further comprises:
detecting the eye bag ROI by using the convolutional neural network model, to obtain a lying silkworm detection classification result and lying silkworm position detection information; and
the determining model parameters of the convolutional neural network model based on the eye bag detection score, the eye bag position detection information, the eye bag annotation score, and the eye bag position annotation information of the sample image comprises:
determining the model parameters of the convolutional neural network model based on the eye bag detection score, the eye bag position detection information, the eye bag annotation score, the eye bag position annotation information, the lying silkworm annotation classification result, the lying silkworm position annotation information, the lying silkworm detection classification result, and the lying silkworm position detection information of the sample image.

12. An eye bag detection apparatus, comprising:
an obtaining module, configured to obtain a to-be-detected image, wherein the to-be-detected image comprises an eye bag ROI;
a detection module, configured to detect the eye bag ROI by using a preset convolutional neural network model, to obtain an eye bag detection score and eye bag position detection information; and
an annotation module, configured to annotate an eye bag in the to-be-detected image based on the eye bag detection score and the eye bag position detection information when the eye bag detection score is within a preset score range, to obtain eye bag annotation information.

13. The apparatus according to claim 12, wherein the detection module is further configured to detect the eye bag ROI by using the preset convolutional neural network model, to obtain a lying silkworm detection classification result and lying silkworm position detection information; and
the annotation module is further configured to annotate a lying silkworm in the to-be-detected image based on the lying silkworm detection classification result and the lying silkworm position detection information when the lying silkworm detection classification result is yes, to obtain lying silkworm annotation information.

14. A convolutional neural network model training apparatus, comprising:
an obtaining module, configured to obtain a plurality of sample images, wherein the sample image comprises an eye bag ROI, and the sample image carries an eye bag annotation score and eye bag position annotation information;
a detection module, configured to detect the eye bag ROI by using a convolutional neural network model, to obtain an eye bag detection score and eye bag position detection information; and
a determining module, configured to determine model parameters of the convolutional neural network model based on the eye bag detection score, the eye bag position detection information, the eye bag annotation score, and the eye bag position annotation information of the sample image.

15. The apparatus according to claim 14, wherein the sample image further carries a lying silkworm annotation classification result and lying silkworm position annotation information;
the detection module is further configured to detect the eye bag ROI by using the convolutional neural network model, to obtain a lying silkworm detection classification result and lying silkworm position detection information; and
the determining module is further configured to determine the model parameters of the convolutional neural network model based on the eye bag detection score, the eye bag position detection information, the eye bag annotation score, the eye bag position annotation information, the lying silkworm annotation classification result, the lying silkworm position annotation information, the lying silkworm detection classification result, and the lying silkworm position detection information of the sample image.

16. A terminal, comprising a memory and a processor, wherein the memory is configured to store a computer program, and the processor is configured to perform the method according to any one of claims 1 to 9 or the method according to any one of claims 10 and 11 when invoking the computer program.

17. A computer-readable storage medium, wherein the computer-readable storage medium stores a computer program, and when the computer program is executed by a processor, the method according to any one of claims 1 to 9 or the method according to any one of claims 10 and 11 is implemented.
